# EUROPÄISCHE PATENTSCHRIFT

(11) **EP 3 083 835 B1**
(45) Veröffentlichungstag und Bekanntmachung des Hinweises auf die Patenterteilung: **26.09.2018**
(21) Anmeldenummer: 14801933.4
(22) Anmeldetag: 19.11.2014
(51) Int. Cl.: C09B 57/00, G02F 1/137, G02F 1/1347

(54) **FARBSTOFF-VERBINDUNGEN**
DYE COMPOUNDS
COMPOSÉS COLORANTS

(30) Priorität: 19.12.2013 EP 13005918
(43) Veröffentlichungstag der Anmeldung: 26.10.2016
(73) Patentinhaber: Merck Patent GmbH, 64293 Darmstadt (DE)
(72) Erfinder: TONG, Qiong, 64291 Darmstadt (DE); KIRSCH, Peer, 64342 Seeheim-Jugenheim (DE); JUNGE, Michael, 64319 Pfungstadt (DE); PATWAL, Ursula, 64353 Reinheim (DE); BEYER, Andreas, 63452 Hanau (DE)
(86) Internationale Anmeldenummer: PCT/EP2014/003087
(87) Internationale Veröffentlichungsnummer: WO 2015/090497

(56) Entgegenhaltungen:
- WO-A1-2004/090046
- WO-A1-2009/141295
- WO-A1-2012/095627
- WO-A1-2013/004677
- WO-A1-2014/180525
- US-A- 4 308 162
- US-A1- 2008 143 935
- US-A1- 2008 180 611
- DEBIJE M G: "Solar Energy Collectors with Tunable Transmission", ADVANCED FUNCTIONAL MATERIALS, WILEY - V C H VERLAG GMBH & CO. KGAA, DE, Bd. 20, Nr. 9, 10. Mai 2010 (2010-05-10), Seiten 1498-1502, XP001553449, ISSN: 1616-301X, DOI: 10.1002/ADFM.200902403

## Beschreibung

Die vorliegende Erfindung betrifft eine Verbindung der Formel (I), welche ein derivatisiertes Diketopyrrolopyrrol-Grundgerüst aufweist. Die Verbindung der Formel (I) eignet sich zur Verwendung in einer flüssigkristallinen Mischung enthaltend mindestens eine weitere Verbindung, die gewählt ist aus flüssigkristallinen Verbindungen. Die Mischung wird bevorzugt in einer Vorrichtung enthaltend eine Schaltschicht als Material dieser Schaltschicht verwendet. Besonders bevorzugt ist die Verwendung in der Schaltschicht einer Vorrichtung zur Regulierung des Licht-Eintritts in einen Raum hinein.

Unter dem Begriff Licht wird im Rahmen der vorliegenden Erfindung insbesondere elektromagnetische Strahlung im UV-A-, VIS-, sowie NIR-Bereich verstanden. Insbesondere wird darunter Licht einer Wellenlänge verstanden, welche von den üblicherweise in Fenstern verwendeten Materialien (z. B. Glas) nicht oder nur in einem vernachlässigbaren Umfang absorbiert wird. Gemäß den üblicherweise verwendeten Definitionen wird unter dem UV-A-Bereich eine Wellenlänge von 320 bis 380 nm verstanden, unter dem VIS-Bereich eine Wellenlänge von 380 nm bis 780 nm verstanden und unter dem NIR-Bereich eine Wellenlänge von 780 nm bis 2000 nm verstanden.

Unter einer flüssigkristallinen Verbindung wird im Rahmen der vorliegenden Erfindung eine Verbindung verstanden, die unter bestimmten Bedingungen flüssigkristalline Eigenschaften aufweist. Der Terminus flüssigkristalline Eigenschaften ist dem Fachmann geläufig und wird so verstanden wie auf dem Gebiet der physikalischen Chemie üblich. Im engeren Sinne wird darunter verstanden, dass die Verbindung flüssig ist und richtungsabhängige Eigenschaften aufweist. Typischerweise sind die flüssigkristallinen Eigenschaften von der Temperatur abhängig. Im engeren Sinne wird daher unter einer flüssigkristallinen Verbindung eine Verbindung verstanden, die in einem Temperaturbereich, der die Raumtemperatur einschließt, flüssigkristalline Eigenschaften aufweist.Typischerweise weist eine flüssigkristalline Verbindung eine langgestreckte Form auf, d.h. sie ist in einer oder zwei Raumrichtungen deutlich länger als in der oder den anderen Raumrichtung(en).

Verbindungen mit Diketopyrrolopyrrol-Grundgerüst sind bereits seit längerem bekannt. In EP 0094911 wird beschrieben, wie Diketopyrrolopyrrol-Verbindungen, die Arylgruppen als Substituenten aufweisen, effizient hergestellt werden können.

Diketopyrrolopyrrol-Verbindungen sind als Farbstoffe, beispielsweise für Polymere, bekannt (EP 0094911). Weiterhin ist die Verwendung dieser Verbindungsklasse als Fluoreszenzmarker und als Bestandteile von organischen Halbleitern und entsprechenden Halbleitervorrichtungen bekannt (WO 2004/090046).

In WO 2012/095627 A1 wird die Verwendung von Pigmentpartikeln und ionischen Dotierstoffen in flüssigkristallinen Medien mit smektischer Phase vom Typ A beschrieben.

Auf dem Gebiet der Vorrichtungen zur Regulierung des Licht-Eintritts in einen Raum besteht Interesse an technischen Lösungen, mit denen haltbare und leistungsfähige Vorrichtungen erhalten werden können.

Ein vorteilhafter Ansatz für diese Vorrichtungen ist die Verwendung von Schaltschichten enthaltend eine Mischung aus mindestens einer flüssigkristallinen Verbindung in Kombination mit mindestens einem dichroitischen Farbstoff. Durch Anlegen einer Spannung kann bei diesen Schaltschichten eine Veränderung der räumlichen Ausrichtung der Farbstoffmoleküle erzielt werden, welche eine Änderung ihrer Absorption und damit der Transmission durch die Schaltschicht bewirkt. Eine entsprechende Vorrichtung ist beispielsweise in WO 2009/141295 beschrieben.

Zur Verwendung in den genannten Vorrichtungen sind bereits Rylen-Farbstoffe beschrieben worden, beispielsweise in WO 2009/141295, WO 2013/004677 und WO 2014/090373.

Bezüglich der Mischungen zur Verwendung in den genannten Schaltschichten besteht kontinuierlich Verbesserungsbedarf, insbesondere in Hinblick auf Lichtstabilität, Langzeitstabilität der Lösung und hohen Anisotropiegrad der Absorption. Weiterhin ist es für bestimmte Anwendungen hoch relevant, dass die Mischungen eine hohe Fluoreszenzintensität aufweisen. Nochmals weiterhin ist es für die Entwicklung der Technik wünschenswert, Alternativen zu den bekannten Farbstoffen zur Verfügung zu haben.

Im Rahmen von Untersuchungen zu geeigneten Farbstoffverbindungen wurde nun überraschend gefunden, dass eine oder mehrere der oben genannten technischen Aufgaben durch die flüssigkristalline Mischung gemäß Anspruch 1 gelöst werden.

Gegenstand der vorliegenden Erfindung ist somit eine flüssigkristalline Mischung, enthaltend mindestens eine Verbindung gemäß der Formel (I) 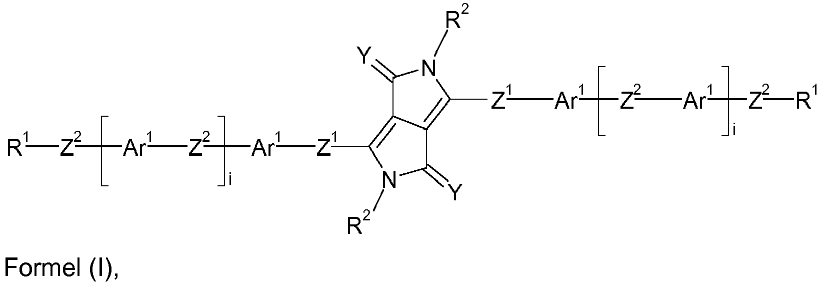 wobei für die auftretenden Symbole gilt:
- Y: ist O;
- Z¹: ist eine Einfachbindung
- Z²: ist bei jedem Auftreten gleich oder verschieden eine Einfachbindung oder eine Gruppe gewählt aus O, S, -C(R³)₂-, -C(R³)₂O-, -OC(R³)₂-, -CR³=CR³- und -C≡C-, oder zwei, drei, vier oder fünf miteinander kombinierte Gruppen, gewählt aus den genannten Gruppen;
- Ar¹: ist bei jedem Auftreten gleich oder verschieden eine Aryl- oder Heteroarylgruppe mit 5 bis 30 aromatischen Ringatomen, die mit einem oder mehreren Resten R⁴ substituiert sein kann;
- R¹: ist wie in Anspruch 1 definiert;
- R^{Y}, R², R³, R⁴: sind bei jedem Auftreten gleich oder verschieden H, D, F, Cl, CN, N(R⁵)₂, eine Alkyl-, Alkoxy- oder Thioalkoxygruppe mit 1 bis 15 C-Atomen oder eine Alkenyl- oder Alkinylgruppe mit 2 bis 15 C-Atomen, wobei die oben genannten Gruppen jeweils mit einem oder mehreren Resten R⁵ substituiert sein können und wobei eine oder mehrere CH₂-Gruppen in den oben genannten Gruppen durch -R⁵C=CR⁵-, -C≡C-, C=O, C=S, -C(=O)O-, -O(C=O)-, Si(R⁵)₂, NR⁵, -O- oder -S- ersetzt sein können, oder eine Aryl- oder Heteroarylgruppe mit 5 bis 30 aromatischen Ringatomen, die jeweils mit einem oder mehreren Resten R⁵ substituiert sein kann;
- R⁵: ist bei jedem Auftreten gleich oder verschieden H, D, F, Cl, CN, N(R⁶)₂, eine Alkyl-, Alkoxy- oder Thioalkoxygruppe mit 1 bis 15 C-Atomen oder eine Alkenyl- oder Alkinylgruppe mit 2 bis 15 C-Atomen, wobei die oben genannten Gruppen jeweils mit einem oder mehreren Resten R⁶ substituiert sein können und wobei eine oder mehrere CH₂-Gruppen in den oben genannten Gruppen durch -R⁶C=CR⁶-, -C≡C-, C=O, C=S, -C(=O)O-, -O(C=O)-, Si(R⁶)₂, NR⁶, -O- oder -S- ersetzt sein können, oder eine Aryl- oder Heteroarylgruppe mit 5 bis 30 aromatischen Ringatomen, die jeweils mit einem oder mehreren Resten R⁶ substituiert sein kann;
- R⁶: ist bei jedem Auftreten gleich oder verschieden H, F oder ein aliphatischer organischer Rest mit 1 bis 20 C-Atomen, in dem ein oder mehrere H-Atome durch F ersetzt sein können, oder eine Aryl- oder Heteroarylgruppe mit 5 bis 20 C-Atomen, in der ein oder mehrere H-Atome durch F ersetzt werden können;
- i: ist bei jedem Auftreten gleich oder verschieden 0, 1, 2, 3 oder 4;
sowie mindestens eine weitere Verbindung, die gewählt ist aus flüssigkristallinen Verbindungen,
wobei die mindestens eine Verbindung gemäß der Formel (I) in Lösung vorliegt.

Die Mischungen zeichnen sich durch eine oder mehrere wünschenswerte Eigenschaften, gewählt aus Lichtstabilität, Langzeitstabilität der Lösung, hohem Anisotropiegrad der Absorption und hoher Fluoreszenzintensität aus.

Wenn i größer als 1 ist, können die Gruppen innerhalb der Klammern gleich oder verschieden sein.

Wenn i gleich 0 ist, fällt die Gruppe innerhalb der Klammern weg, und die Gruppen Ar¹ und Z² sind direkt miteinander verbunden.

Unter der Formulierung "zwei, drei, vier oder fünf miteinander kombinierte Gruppen, gewählt aus den Gruppen..." ist im Sinne der vorliegenden Erfindung zu verstehen, dass die Gruppen aneinander gebunden vorliegen, bevorzugt in Form einer Kette, in der zwei, drei, vier oder fünf der Gruppen aneinander gebunden vorliegen. Bevorzugt ist eine Kombination von genau zwei oder drei Gruppen. Die Gruppen können allgemein gleich oder verschieden sein.

Eine Arylgruppe im Sinne dieser Erfindung enthält 6 bis 30 aromatische Ringatome; eine Heteroarylgruppe im Sinne dieser Erfindung enthält 5 bis 30 aromatische Ringatome, von denen mindestens eines ein Heteroatom darstellt. Die Heteroatome sind bevorzugt ausgewählt aus N, O und S. Dies stellt die grundlegende Definition dar. Werden in der Beschreibung der vorliegenden Erfindung andere Bevorzugungen angegeben, beispielsweise bezüglich der Zahl der aromatischen Ringatome oder der enthaltenen Heteroatome, so gelten diese.

Dabei wird unter einer Arylgruppe bzw. Heteroarylgruppe entweder ein einfacher aromatischer Cyclus, also Benzol, bzw. ein einfacher heteroaromatischer Cyclus, beispielsweise Pyridin, Pyrimidin oder Thiophen, oder ein kondensierter (annellierter) aromatischer bzw. heteroaromatischer Polycyclus, beispielsweise Naphthalin, Phenanthren, Chinolin oder Carbazol verstanden. Ein kondensierter (annellierter) aromatischer bzw. heteroaromatischer Polycyclus besteht im Sinne der vorliegenden Erfindung aus zwei oder mehr miteinander kondensierten einfachen aromatischen bzw. heteroaromatischen Cyclen. Ein solcher Polycyclus kann auch einzelne nichtkonjugierte Einheiten enthalten, wie es beispielsweise beim Fluoren-Grundkörper der Fall ist.

Unter einer Aryl- oder Heteroarylgruppe, die jeweils mit den oben genannten Resten substituiert sein kann und die über beliebige Positionen am Aromaten bzw. Heteroaromaten verknüpft sein kann, werden insbesondere Gruppen verstanden, welche abgeleitet sind von Benzol, Naphthalin, Anthracen, Phenanthren, Pyren, Dihydropyren, Chrysen, Perylen, Fluoranthen, Benzanthracen, Benzphenanthren, Tetracen, Pentacen, Benzpyren, Fluoren, Spirobifluoren, Furan, Benzofuran, Isobenzofuran, Dibenzofuran, Thiophen, Benzothiophen, Isobenzothiophen, Dibenzothiophen, Selenophen, Benzoselenophen, Dibenzoselenophen, Pyrrol, Indol, Isoindol, Carbazol, Pyridin, Chinolin, Isochinolin, Acridin, Phenanthridin, Benzo-5,6-chinolin, Benzo-6,7-chinolin, Benzo-7,8-chinolin, Phenothiazin, Phenoxazin, Pyrazol, Indazol, Imidazol, Benzimidazol, Naphthimidazol, Phenanthrimidazol, Pyridimidazol, Pyrazinimidazol, Chinoxalinimidazol, Oxazol, Benzoxazol, Naphthoxazol, Anthroxazol, Phenanthroxazol, Isoxazol, 1,2-Thiazol, 1,3-Thiazol, Benzothiazol, Pyridazin, Benzopyridazin, Pyrimidin, Benzpyrimidin, Chinoxalin, Pyrazin, Phenazin, Naphthyridin, Azacarbazol, Benzocarbolin, Phenanthrolin, 1,2,3-Triazol, 1,2,4-Triazol, Benzotriazol, 1,2,3-Oxadiazol, 1,2,4-Oxadiazol, 1,2,5-Oxadiazol, 1,3,4-Oxadiazol, 1,2,3-Thiadiazol, 1,2,4-Thiadiazol, 1,2,5-Thiadiazol, 1,3,4-Thiadiazol, 1,3,5-Triazin, 1,2,4-Triazin, 1,2,3-Triazin, Tetrazol, 1,2,4,5-Tetrazin, 1,2,3,4-Tetrazin, 1,2,3,5-Tetrazin, Purin, Pteridin, Indolizin und Benzothiadiazol.

Im Rahmen der vorliegenden Erfindung werden unter einer Alkylgruppe mit 1 bis 15 C-Atomen bzw. einer Alkenyl- oder Alkinylgruppe mit 2 bis 15 C-Atomen, in der auch einzelne H-Atome oder CH₂-Gruppen durch die oben bei der Definition der Reste genannten Gruppen substituiert sein können, bevorzugt die Reste Methyl, Ethyl, n-Propyl, i-Propyl, n-Butyl, i-Butyl, s-Butyl, t-Butyl, 2-Methylbutyl, n-Pentyl, s-Pentyl, Cyclopentyl, neo-Pentyl, n-Hexyl, Cyclohexyl, neo-Hexyl, n-Heptyl, Cycloheptyl, n-Octyl, Cyclooctyl, 2-Ethylhexyl, Trifluormethyl, Pentafluorethyl, 2,2,2-Trifluorethyl, Ethenyl, Propenyl, Butenyl, Pentenyl, Cyclopentenyl, Hexenyl, Cyclohexenyl, Heptenyl, Cycloheptenyl, Octenyl, Cyclooctenyl, Ethinyl, Propinyl, Butinyl, Pentinyl, Hexinyl oder Octinyl verstanden.

Unter einer Alkoxy- oder Thioalkoxygruppe mit 1 bis 15 C-Atomen werden bevorzugt Methoxy, Trifluormethoxy, Ethoxy, n-Propoxy, i-Propoxy, n-Butoxy, i-Butoxy, s-Butoxy, t-Butoxy, n-Pentoxy, s-Pentoxy, 2-Methylbutoxy, n-Hexoxy, Cyclohexyloxy, n-Heptoxy, Cycloheptyloxy, n-Octyloxy, Cyclooctyloxy, 2-Ethylhexyloxy, Pentafluorethoxy, 2,2,2-Trifluorethoxy, Methylthio, Ethylthio, n-Propylthio, i-Propylthio, n-Butylthio, i-Butylthio, s-Butylthio, t-Butylthio, n-Pentylthio, s-Pentylthio, n-Hexylthio, Cyclohexylthio, n-Heptylthio, Cycloheptylthio, n-Octylthio, Cyclooctylthio, 2-Ethylhexylthio, Trifluormethylthio, Pentafluorethylthio, 2,2,2-Trifluorethylthio, Ethenylthio, Propenylthio, Butenylthio, Pentenylthio, Cyclopentenylthio, Hexenylthio, Cyclohexenylthio, Heptenylthio, Cycloheptenylthio, Octenylthio, Cyclooctenylthio, Ethinylthio, Propinylthio, Butinylthio, Pentinylthio, Hexinylthio, Heptinylthio oder Octinylthio verstanden.

Unter einem aliphatischen organischen Rest mit 1 bis 20 C-Atomen wird prinzipiell ein beliebiger organischer Rest verstanden, welcher nicht aromatisch bzw. heteroaromatisch ist. Bevorzugt werden darunter Alkylgruppen mit 1 bis 15 C-Atomen, Alkoxygruppen mit 1 bis 15 C-Atomen, Alkenyl- oder Alkinylgruppen mit 2 bis 15 C-Atomen, wie oben näher beschrieben, verstanden.

Erfindungsgemäß ist Y gleich O.

Erfindungsgemäß ist Z¹ eine Einfachbindung. Verbindungen der Formel (I) mit diesem erfindungsgemäßen Merkmal führen zu Vorrichtungen mit einer besonders langen Betriebs-Lebensdauer.

Für Z² ist es bevorzugt, dass es bei jedem Auftreten gleich oder verschieden eine Einfachbindung oder eine Gruppe gewählt aus O, S, C(R³)2, -C(R³)₂O-, -OC(R³)₂-, -CR³=CR³- und -C≡C- ist, besonders bevorzugt eine Einfachbindung oder eine Gruppe gewählt aus -CH₂CH₂-, -CF₂CF₂-, -OCH₂-, -OCF₂-, -CH₂O-, -CF₂O-, -CH=CH-, -CF=CF- und -C≡C-, und am stärksten bevorzugt eine Einfachbindung. Verbindungen der Formel (I) mit diesem Merkmal führen zu besonders stabilen Vorrichtungen.

Bevorzugt ist Ar¹ bei jedem Auftreten gleich oder verschieden eine Arylgruppe mit 6 bis 18 aromatischen Ringatomen, die mit einem oder mehreren Resten R⁴ substituiert sein kann, oder eine Heteroarylgruppe mit 5 bis 18 aromatischen Ringatomen, die mit einem oder mehreren Resten R⁴ substituiert sein kann. Besonders bevorzugt ist Ar¹ bei jedem Auftreten gleich oder verschieden eine Arylgruppe mit 6 bis 13 aromatischen Ringatomen, die mit einem oder mehreren Resten R⁴ substituiert sein kann, oder eine Heteroarylgruppe mit 5 bis 13 aromatischen Ringatomen, die mit einem oder mehreren Resten R⁴ substituiert sein kann. Ganz besonders bevorzugt ist Ar¹ bei jedem Auftreten gleich oder verschieden gewählt aus Benzol, Fluoren, Naphthalin, Pyridin, Pyrimidin, Pyrazin, Triazin, Thiophen, Benzothiophen, Dibenzothiophen, Furan, Benzofuran, Dibenzofuran, Indol, Carbazol, Thiazol, Benzothiazol und Chinolin, die jeweils mit einem oder mehreren Resten R⁴ substituiert sein können.

Für R^{Y} ist es bevorzugt, dass es gleich CN ist.

Erfindungsgemäß ist R¹ bei jedem Auftreten gleich oder verschieden F oder eine geradkettige Alkyl- oder Alkoxylgruppe mit 3 bis 12 C-Atomen, die mit einem oder mehreren Resten R⁵ substituiert sein kann, oder eine verzweigte Alkyl- oder Alkoxygruppe mit 3 bis 12 C-Atomen, die mit einem oder mehreren Resten R⁵ substituiert sein kann, oder eine cyclische Alkylgruppe mit 6 C-Atomen, die mit einem oder mehreren Resten R⁵ substituiert sein kann, wobei in den Alkyl- und Alkoxygruppen eine oder mehrere CH₂-Gruppen durch -O- oder -S- ersetzt sein können. Bevorzugt ist R¹ bei jedem Auftreten gleich oder verschieden eine geradkettige Alkylgruppe mit 3 bis 12 C-Atomen, die mit einem oder mehreren Resten R⁵ substituiert sein kann, oder eine verzweigte Alkylgruppe mit 3 bis 12 C-Atomen, die mit einem oder mehreren Resten R⁵ substituiert sein kann, oder eine cyclische Alkylgruppe mit 6 C-Atomen, die mit einem oder mehreren Resten R⁵ substituiert sein kann, wobei in den Alkyl- und Alkoxygruppen eine oder mehrere CH₂-Gruppen durch -O- oder -S- ersetzt sein können. Derartige Ausführungsformen der Verbindung der Formel (I) zeichnen sich durch eine hervorragende Löslichkeit in Mischungen enthaltend mindestens eine flüssigkristalline Verbindung aus.

R² ist bevorzugt bei jedem Auftreten gleich oder verschieden H, eine Alkylgruppe mit 1 bis 15 C-Atomen, die mit einem oder mehreren Resten R⁵ substituiert sein kann, oder eine Aryl- oder Heteroarylgruppe mit 5 bis 18 aromatischen Ringatomen, die mit einem oder mehreren Resten R⁵ substituiert sein kann. Besonders bevorzugt ist R² bei jedem Auftreten gleich oder verschieden eine Alkylgruppe mit 1 bis 12 C-Atomen, die mit einem oder mehreren Resten R⁵ substituiert sein kann, ganz besonders bevorzugt eine verzweigte Alkylgruppe mit 3 bis 12 C-Atomen, die mit einem oder mehreren Resten R⁵ substituiert sein kann.

R³ ist bevorzugt bei jedem Auftreten gleich oder verschieden H, F, oder eine Alkylgruppe mit 1 bis 15 C-Atomen, die mit einem oder mehreren Resten R⁵ substituiert sein kann. Besonders bevorzugt ist R³ bei jedem Auftreten gleich oder verschieden H oder F.

R⁴ ist bevorzugt bei jedem Auftreten gleich oder verschieden H, D, F, CN, oder eine Alkyl- oder Alkoxygruppe mit 1 bis 15 C-Atomen, die mit einem oder mehreren Resten R⁵ substituiert sein kann. Besonders bevorzugt ist R⁴ bei jedem Auftreten gleich oder verschieden H, F oder CN.

R⁵ ist bei jedem Auftreten gleich oder verschieden H, F, CN, oder eine Alkyl- oder Alkoxygruppe mit 1 bis 15 C-Atomen, die mit einem oder mehreren Resten R⁶ substituiert sein kann, oder eine Aryl- oder Heteroarylgruppe mit 5 bis 18 aromatischen Ringatomen, die jeweils mit einem oder mehreren Resten R⁶ substituiert sein kann.

Für den Index i ist es bevorzugt, dass er bei jedem Auftreten gleich oder verschieden 1 oder 2 ist, besonders bevorzugt 1. Solche Verbindungen zeichnen sich aus durch gute Orientierung relativ zur flüssigkristallinen Verbindung in der Mischung und eine hohe Anisotropie der Absorption. Weiterhin haben sie eine gute Löslichkeit und einen hohen Extinktionskoeffizienten.

Weiterhin ist es bevorzugt, dass der Index i bei jedem Auftreten gleich gewählt ist.

Bevorzugte Verbindungen der Formel (I) in der erfindungsgemäßen Mischung sind gewählt aus Verbindungen der Formeln (I-1) bis (I-2) 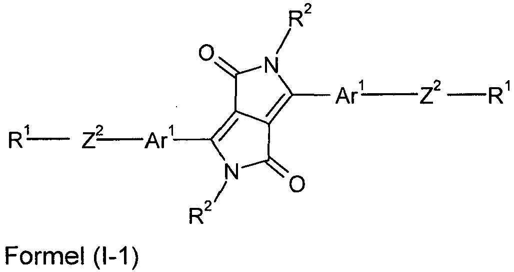 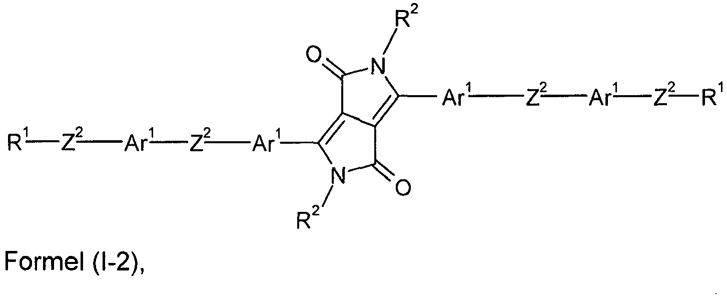 wobei die auftretenden Reste wie oben definiert sind und bevorzugt den oben angegebenen bevorzugten Ausführungsformen entsprechen.

Besonders bevorzugt ist es für Verbindungen der Formel (I-1) oder (I-2), dass R² bei jedem Auftreten gleich oder verschieden gewählt ist aus einer Alkylgruppe mit 1 bis 12 C-Atomen, die mit einem oder mehreren Resten R⁵ substituiert sein kann, ganz besonders bevorzugt aus einer verzweigten Alkylgruppe mit 3 bis 12 C-Atomen, die mit einem oder mehreren Resten R⁵ substituiert sein kann.

Weiterhin bevorzugt ist es, dass Ar¹ bei jedem Auftreten gleich oder verschieden gewählt ist aus Benzol, Fluoren, Naphthalin, Pyridin, Pyrimidin, Pyrazin, Triazin, Thiophen, Benzothiophen, Dibenzothiophen, Furan, Benzofuran, Dibenzofuran, Indol, Carbazol, Thiazol, Benzothiazol und Chinolin, die jeweils mit einem oder mehreren Resten R⁴ substituiert sein können.

Bevorzugte Verbindungen der Formel (I-1) und (I-2) entsprechen den folgenden Formeln (I-1-1) bis (I-1-6) und (I-2-1) bis (I-2-4) 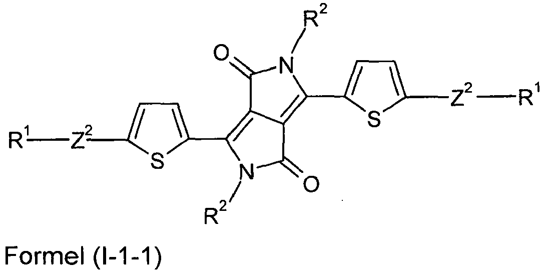 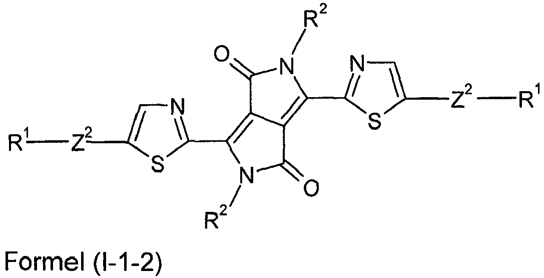 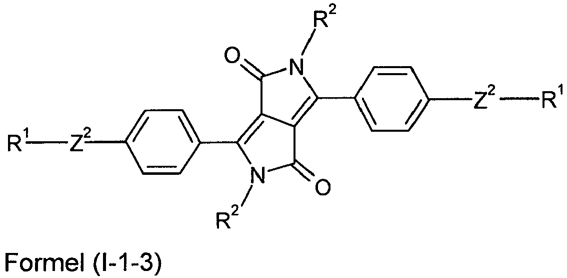 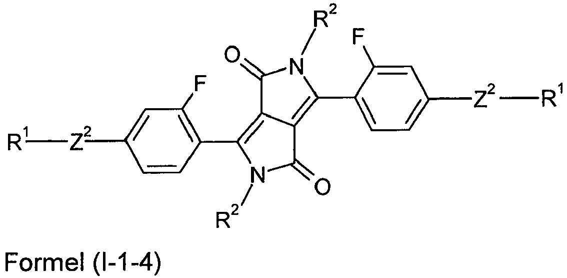 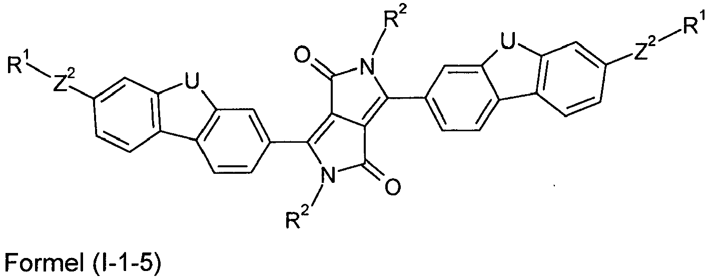 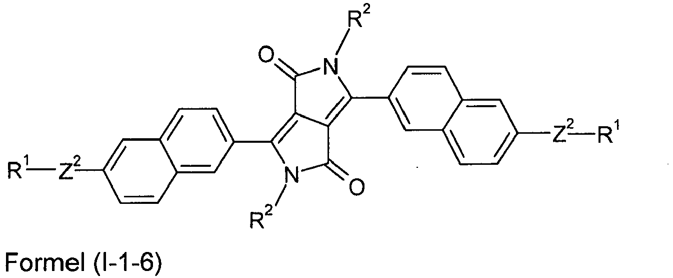 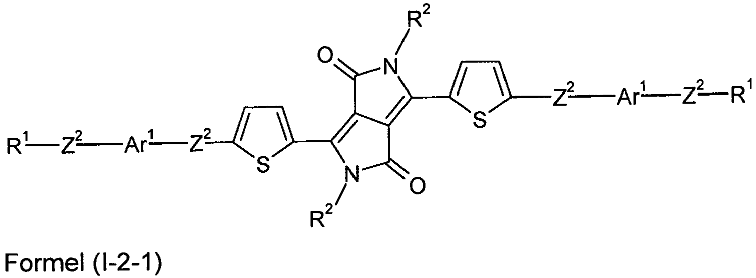 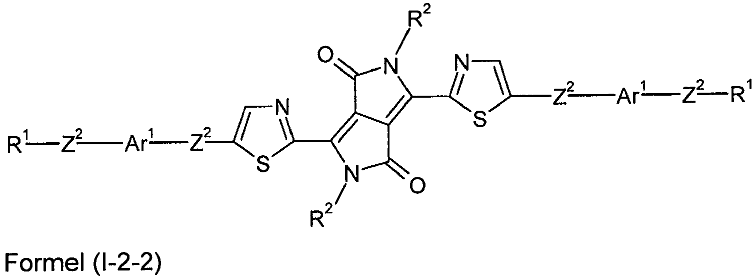 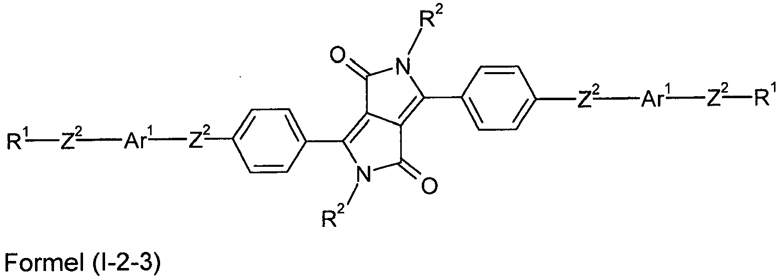 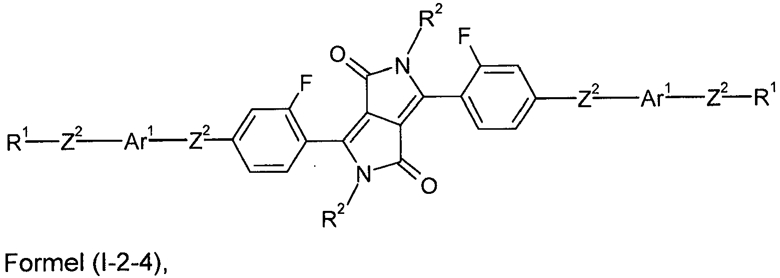 wobei die auftretenden Symbole wie oben definiert sind und U bei jedem Auftreten gleich oder verschieden gewählt ist aus C=O und C(R⁴)₂, und bevorzugt C(R⁴)₂ ist. Weiterhin entsprechen die auftretenden Symbole bevorzugt ihren oben angegebenen bevorzugten Ausführungsformen.

Besonders bevorzugt ist es für Verbindungen der Formel (I-1-1) bis (I-1-6) und (I-2-1) bis (I-2-4), dass R² bei jedem Auftreten gleich oder verschieden gewählt ist aus einer Alkylgruppe mit 1 bis 12 C-Atomen, die mit einem oder mehreren Resten R⁵ substituiert sein kann, ganz besonders bevorzugt aus einer verzweigten Alkylgruppe mit 3 bis 12 C-Atomen, die mit einem oder mehreren Resten R⁵ substituiert sein kann.

Weiterhin bevorzugt ist es für die genannten Verbindungen, dass Ar¹ bei jedem Auftreten gleich oder verschieden gewählt ist aus Benzol, Fluoren, Naphthalin, Pyridin, Pyrimidin, Pyrazin, Triazin, Thiophen, Benzothiophen, Dibenzothiophen, Furan, Benzofuran, Dibenzofuran, Indol, Carbazol, Thiazol, Benzothiazol und Chinolin, die jeweils mit einem oder mehreren Resten R⁴ substituiert sein können.

Allgemein ist es im Rahmen der vorliegenden Erfindung bevorzugt, dass bevorzugte Ausführungsformen der Verbindungen der Formel (I) miteinander kombiniert werden.

Für die vorliegend beschriebenen Verbindungen der Formel (I-1-5) ist es bevorzugt, dass
- U: gleich C(R⁴)2 ist;
- Z²: bei jedem Auftreten gleich oder verschieden eine Einfachbindung oder eine Gruppe gewählt aus O, S, C(R³)₂, -C(R³)₂O-, -OC(R³)₂-, -CR³=CR³- und -C≡C-, und besonders bevorzugt eine Einfachbindung oder eine Gruppe gewählt aus -CH₂CH₂-, -CF₂CF₂-, -OCH₂-, -OCF₂-, -CH₂O-, -CF₂O-, -CH=CH-, -CF=CF- und -C≡C-, und am stärksten bevorzugt eine Einfachbindung;
- R¹: bei jedem Auftreten gleich oder verschieden F oder eine geradkettige Alkyl- oder Alkoxylgruppe mit 3 bis 12 C-Atomen, die mit einem oder mehreren Resten R⁵ substituiert sein kann, oder eine verzweigte Alkyl- oder Alkoxygruppe mit 3 bis 12 C-Atomen, die mit einem oder mehreren Resten R⁵ substituiert sein kann, oder eine cyclische Alkylgruppe mit 6 C-Atomen, die mit einem oder mehreren Resten R⁵ substituiert sein kann, wobei in den Alkyl- und Alkoxygruppen eine oder mehrere CH₂-Gruppen durch-O- oder -S- ersetzt sein können, ist;
- R²: bei jedem Auftreten gleich oder verschieden eine Alkylgruppe mit 1 bis 12 C-Atomen ist, die mit einem oder mehreren Resten R⁵ substituiert sein kann, besonders bevorzugt eine verzweigte Alkylgruppe mit 3 bis 12 C-Atomen, die mit einem oder mehreren Resten R⁵ substituiert sein kann.

Beispiele für Verbindungen gemäß der Formel (I) sind untenstehend abgebildet:

| |
|---|
| 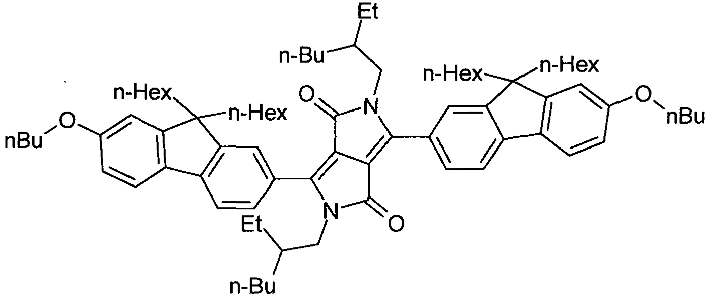 |
| (1) |
| 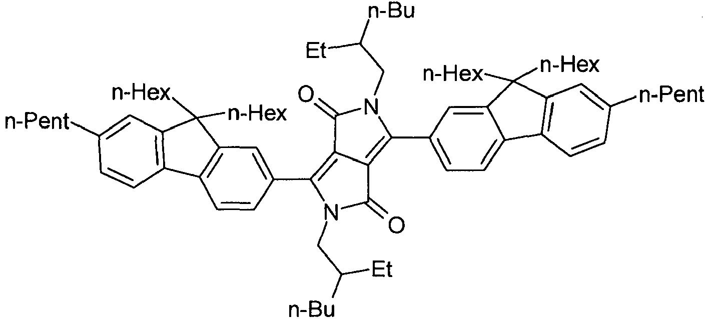 |
| (2) |
| 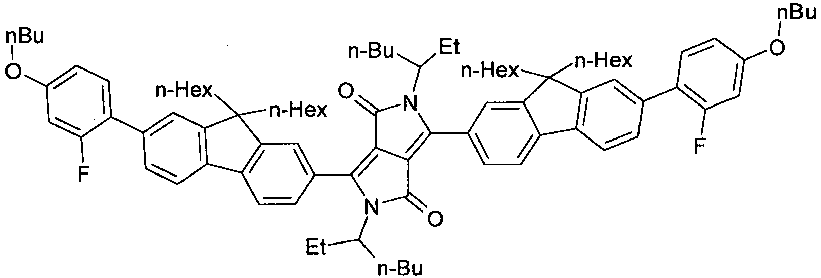 |
| (3) |
| 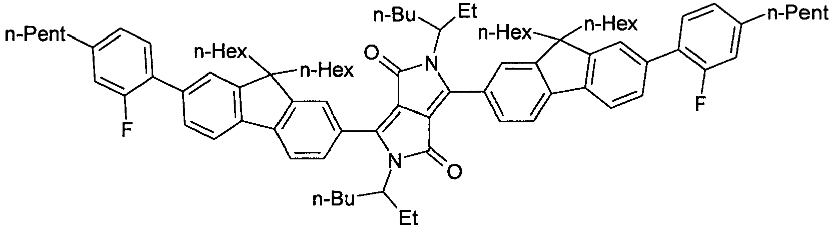 |
| (4) |
| 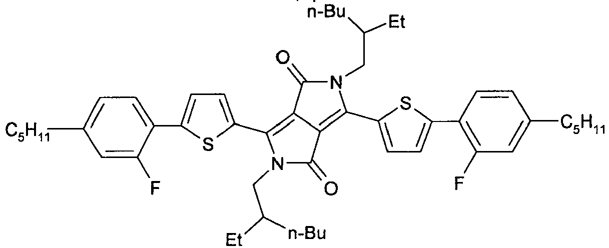 |
| (5) |
| 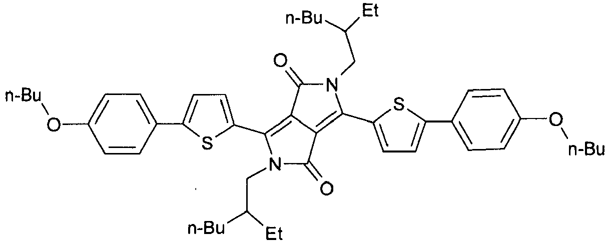 |
| (6) |
| 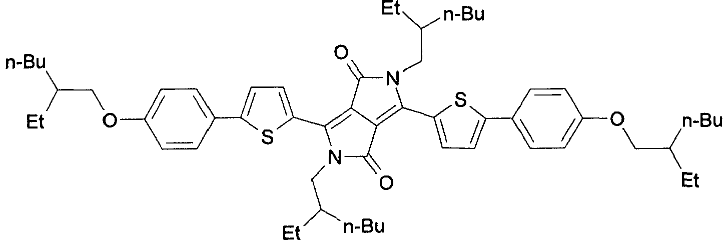 |
| (7) |
| 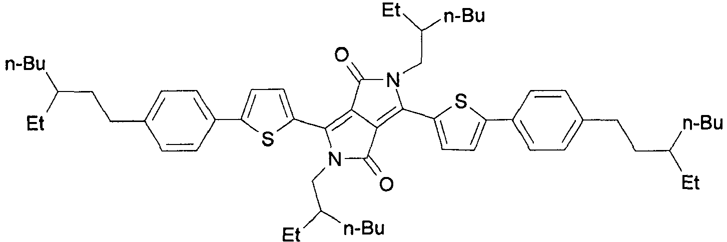 |
| (8) |
| 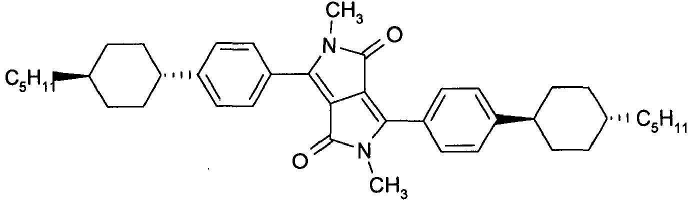 |
| (9) |
| 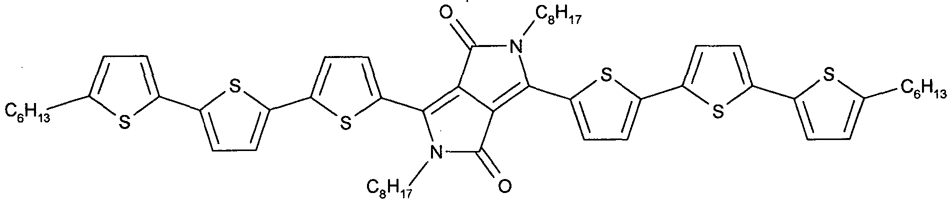 |
| (10) |
| 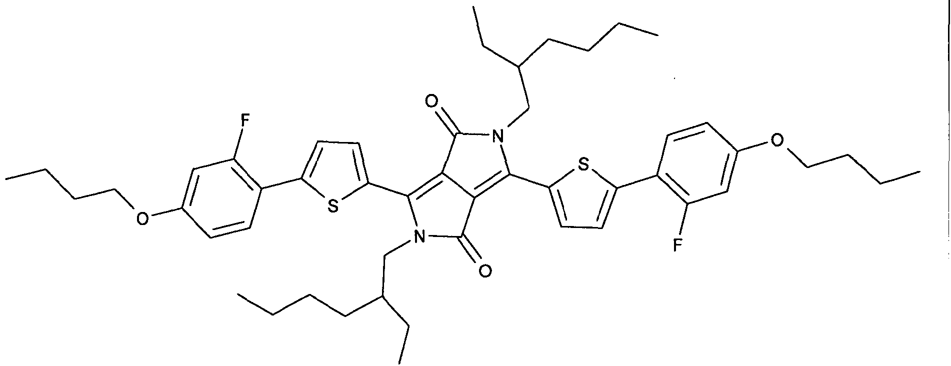 |
| (11) |
| 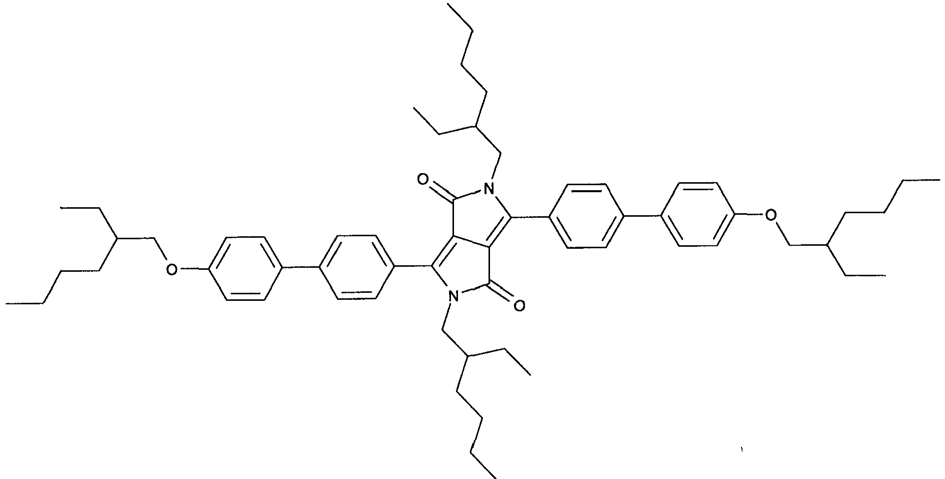 |
| (12) |
| 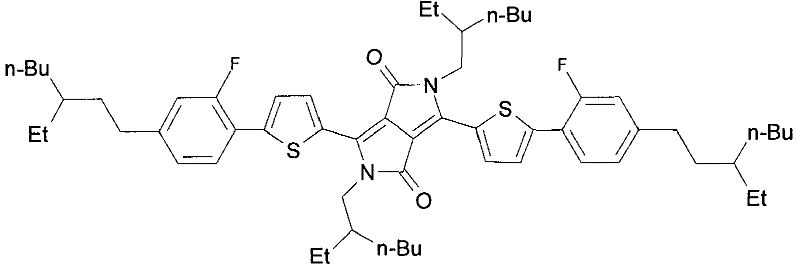 |
| (13) |

Die Verbindungen der Formel (I) können gemäß dem Fachmann bekannten Verfahren hergestellt werden. Insbesondere kann der Fachmann das in EP 0094911 beschriebene Verfahren anwenden, um zu Zwischenstufen der Formel (Int-I) 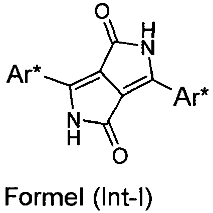 zu gelangen, wobei Ar* bei jedem Auftreten gleich oder verschieden eine Aryl- oder Heteroarylgruppe mit 5 bis 30 aromatischen Ringatomen ist, das mit beliebigen organischen Resten subtituiert sein kann.

Die Zwischenstufe der Formel (Int-I) wird in einem ersten Schritt durch Funktionalisierung des Amid-Stickstoffatoms, beispielsweise durch Alkylierung, weiter umgesetzt. Bevorzugt wird in einem weiteren optionalen Schritt die Gruppe Ar* aktiviert, bevorzugt durch Einführung eines Halogenatoms, besonders bevorzugt durch Bromierung, beispielsweise mit dem Reagenz NBS. Daraufhin wird über eine metallkatalysierte Kupplungsreaktion, bevorzugt eine Suzuki- oder Ullmann-Kupplung, eine weitere Aryl- oder Heteroarylgruppe eingeführt. Es können sich optional weitere Funktionalisierungsreaktionen anschließen.

Das oben beschriebene generelle Verfahren ist im folgenden Schema 1 abgebildet.

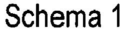

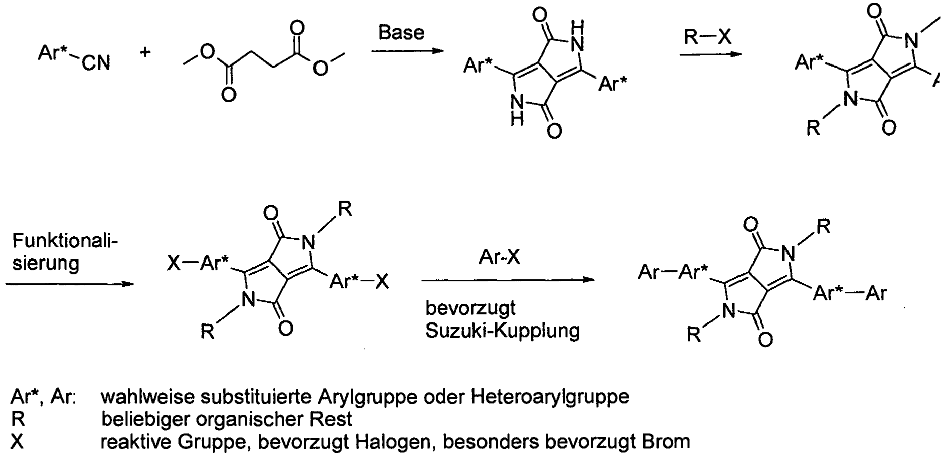

In einer Variante des Verfahrens (Schema 2) wird im ersten Schritt anstelle von zwei Äquivalenten des gleichen Arylcyanids je ein Äquivalent von zwei unterschiedlichen Arylcyaniden eingesetzt. Dadurch können asymmetrische Verbindungen der Formel (I) erhalten werden, das heißt Verbindungen, in denen an die zentrale Diketopyrrolopyrrol-Einheit zwei unterschiedliche Aryl- bzw. Heteroarylgruppen gebunden sind.

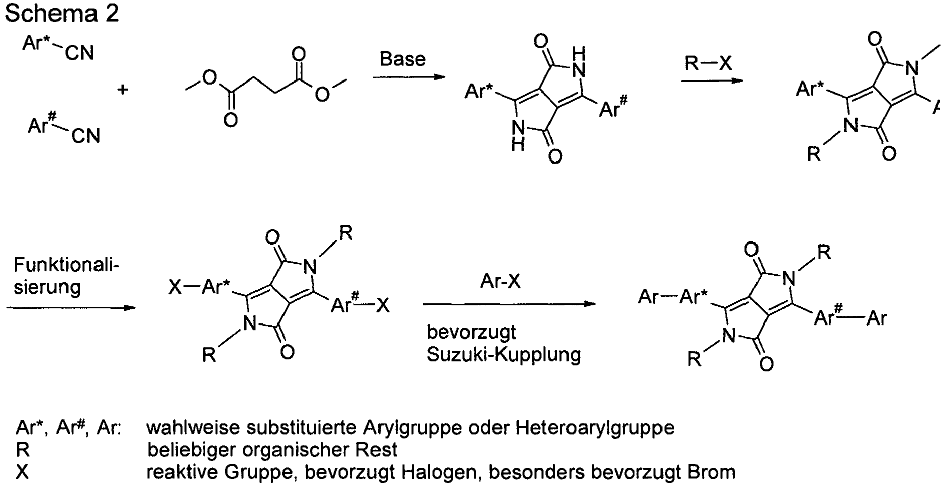

In einer weiteren Variante des Syntheseverfahren von Schema 1 werden die Schritte Funktionalisierung und Suzuki-Kupplung weggelassen. In diesem Fall verbleibt in der Verbindung als Seitenkette exakt die Gruppe, die als Nitril ursprünglich eingeführt worden ist.

Die Verbindung der Formel (I) ist bevorzugt ein Farbstoff, besonders bevorzugt ein dichroitischer Farbstoff. Unter einem dichroitischen Farbstoff wird im Rahmen der vorliegenden Erfindung eine lichtabsorbierende Verbindung verstanden, bei der die Absorptionseigenschaften von der Ausrichtung der Verbindung zur Polarisationsrichtung des Lichts abhängig sind. Typischerweise weist eine dichroitische Farbstoffverbindung gemäß der vorliegenden Erfindung eine langgestreckte Form auf, d.h. die Verbindung ist in einer Raumrichtung deutlich länger (Längsachse) als in den anderen beiden Raumrichtungen.

Die Verbindung der Formel (I) ist bevorzugt ein positiv dichroitischer Farbstoff, d. h. ein Farbstoff, welcher einen positiven Anisotropiegrad R aufweist. Besonders bevorzugt ist der Anisotropiegrad R größer als 0,4, ganz besonders bevorzugt größer als 0,6 und am stärksten bevorzugt größer als 0,7. Für die Bestimmung von R wird ein dem Fachmann geläufiges Verfahren angewendet. Es ist im Einzelnen in der Anmeldung WO 2014/090367 offenbart.

Bevorzugt erreicht die Absorption ein Maximum, wenn die Polarisationsrichtung des Lichts parallel zur Richtung der längsten Ausdehnung des Moleküls gemäß Formel (I) ist, und sie erreicht ein Minimum, wenn die Polarisationsrichtung des Lichts senkrecht zur Richtung der längsten Ausdehnung des Moleküls gemäß Formel (I) ist.

Weiterhin bevorzugt ist die Verbindung der Formel (I) ein fluoreszierender Farbstoff. Unter Fluoreszenz wird dabei verstanden, dass eine Verbindung durch Absorption von Licht einer bestimmten Wellenlänge in einen elektronisch angeregten Zustand versetzt wird, wobei die Verbindung anschließend unter Emission von Licht in den Grundzustand übergeht. Bevorzugt hat das emittierte Licht längere Wellenlänge als das absorbierte Licht. Weiterhin bevorzugt ist der Übergang vom angeregten Zustand in den Grundzustand spin-erlaubt, erfolgt also ohne Änderung des Spins. Weiterhin bevorzugt ist die Lebensdauer des angeregten Zustands der fluoreszierenden Verbindung kürzer als 10⁻⁵ s, besonders bevorzugt kürzer als 10⁻⁶ s, ganz besonders bevorzugt zwischen 10⁻⁹ und 10⁻⁷ s.

Bevorzugt enthält die erfindungsgemäße Mischung genau eine, zwei, drei oder vier verschiedene Verbindungen der Formel (I), besonders bevorzugt zwei oder drei.

Jede einzelne Verbindung der Formel (I) liegt in der erfindungsgemäßen Mischung bevorzugt in einem Anteil von 0.01 bis 10 Gew.-%, besonders bevorzugt von 0.05 bis 7 Gew.-% und ganz besonders bevorzugt von 0.1 bis 7 Gew.-% vor.

Die erfindungsgemäße Mischung enthält mindestens eine weitere Verbindung, die gewählt ist aus flüssigkristallinen Verbindungen. Bevorzugt enthält sie 3 bis 25 verschiedene flüssigkristalline Verbindungen, bevorzugt 8 bis 18, besonders bevorzugt 12 bis 16 verschiedene flüssigkristalline Verbindungen.

Die weiteren Verbindungen, die gewählt sind aus flüssigkristallinen Verbindungen, stellen bevorzugt die Hauptkomponente der Mischung dar. Besonders bevorzugt sind sie zusammengenommen in einem Anteil von 90 bis 99.99 Gew.-%, besonders bevorzugt von 93 bis 99.9 Gew.-% und ganz besonders bevorzugt von 95 bis 99.8 Gew.-% in der Mischung vorhanden.

Die Verbindung der Formel (I) liegt in der erfindungsgemäßen Mischung in Lösung vor. Sie wird bevorzugt in ihrer Ausrichtung durch die Ausrichtung der flüssigkristallinen Verbindungen beeinflusst.

Die erfindungsgemäße Mischung ist ein flüssigkristallines Material. Bevorzugt ist die erfindungsgemäße Mischung ein thermotropes flüssigkristallines Material. Bevorzugt ist die erfindungsgemäße Mischung kein lyotropes flüssigkristallines Material.
Die erfindungsgemäße Mischung hat bevorzugt einen Klärpunkt, besonders bevorzugt einen Phasenübergang von einem nematisch flüssigkristallinen Zustand zu einem isotropen Zustand, im Temperaturbereich von 70 °C bis 170 °C, bevorzugt von 90 °C bis 160 °C, besonders bevorzugt von 95 °C bis 150 °C und ganz besonders bevorzugt von 105 °C bis 140 °C.

Bevorzugt ist weiterhin die dielektrische Anisotropie der erfindungsgemäßen Mischung größer als 3, besonders bevorzugt größer als 7.

Die dielektrische Anisotropie der erfindungsgemäßen Mischung kann aber auch negativ sein. In diesem Fall hat sie bevorzugt einen Wert von -0.5 bis -10, besonders bevorzugt von -1 bis -8 und ganz besonders bevorzugt von -2 bis -6.

Weiterhin bevorzugt hat die erfindungsgemäße Mischung eine optische Anisotropie (Δn) von 0.01 bis 0.3, besonders bevorzugt von 0.04 bis 0.27.

Flüssigkristalline Verbindungen, welche als Bestandteile der erfindungsgemäßen Mischung verwendet werden können, können gemäß dem allgemeinen Fachwissen des Fachmanns beliebig gewählt werden.

Es ist bevorzugt, dass die erfindungsgemäße Mischung als flüssigkristalline Verbindung eine oder mehrere Verbindungen enthält, die eine Nitrilgruppe aufweisen. Weiterhin ist es bevorzugt, dass die erfindungsgemäße Mischung als flüssigkristalline Verbindung mindestens eine Verbindung enthält, welche Strukturelemente basierend auf 1,4-Phenylenen und 1,4-Cyclohexylenen aufweist. Besonders bevorzugt ist es, dass die erfindungsgemäße Mischung als flüssigkristalline Verbindung mindestens eine Verbindung enthält, welche 2, 3 oder 4, besonders bevorzugt 3 oder 4 Strukturelemente basierend auf 1,4-Phenylenen und 1,4-Cyclohexylenen aufweist.

Es ist weiterhin bevorzugt, dass die erfindungsgemäße Mischung einen oder mehrere chirale Dotierstoffe enthält. Chirale Dotierstoffe werden in der erfindungsgemäßen Mischung bevorzugt in einer Gesamtkonzentration von 0.01 bis 3 Gew.-%, besonders bevorzugt von 0.05 bis 1 Gew.-% verwendet. Um hohe Werte für die Verdrillung bei Verwendung der Mischung in einer Vorrichtung zu erhalten, kann die Gesamtkonzentration der chiralen Dotierstoffe auch höher als 3 Gew.-% gewählt werden, bevorzugt bis maximal 10 Gew.-%.

Gemäß einer alternativen, ebenfalls bevorzugten Ausführungsform, enthält die erfindungsgemäße Mischung keine chiralen Dotierstoffe.

Die erfindungsgemäße Mischung enthält weiterhin bevorzugt einen oder mehrere Stabilisatoren. Die Gesamtkonzentration der Stabilisatoren liegt bevorzugt zwischen 0.00001 und 10 Gew.-%, besonders bevorzugt zwischen 0.0001 und 1 Gew.-% der Mischung.

Die erfindungsgemäße Mischung enthält bevorzugt zusätzlich zu der mindestens einen Verbindung der Formel (I) und der mindestens einen flüssigkristallinen Verbindung eine oder mehrere Farbstoffverbindungen mit anderer Struktur als Formel (I). Besonders bevorzugt enthält es eine, zwei, drei oder vier Farbstoffverbindungen mit anderer Struktur als Formel (I), ganz besonders bevorzugt zwei oder drei Farbstoffverbindungen mit anderer Struktur als Formel (I). Diese Farbstoffverbindungen sind bevorzugt dichroitische Farbstoffverbindungen. Weiterhin sind es bevorzugt fluoreszierende Farbstoffverbindungen.

Bezüglich der Eigenschaft des Dichroismus gelten die für die Verbindung der Formel (I) beschriebenen bevorzugten Eigenschaften auch für die optionalen weiteren Farbstoffverbindungen mit anderer Struktur als Formel (I) als bevorzugt.

Die Absorptionsspektren der Farbstoffverbindungen der erfindungsgemäßen Mischung ergänzen sich bevorzugt derart, dass für das Auge der Eindruck von schwarzer Farbe entsteht. Bevorzugt decken die Farbstoffverbindungen der erfindungsgemäßen Mischung einen großen Teil des sichtbaren Spektrums ab. Wie genau eine Mischung von Farbstoffverbindungen hergestellt werden kann, die für das Auge schwarz bzw. grau erscheint, ist dem Fachmann bekannt und beispielsweise in Manfred Richter, Einführung in die Farbmetrik, 2. Auflage, 1981, ISBN 3-11-008209-8, Verlag Walter de Gruyter & Co., beschrieben.

Die Einstellung des Farbortes einer Mischung aus Farbstoffverbindungen wird im Rahmen der Farbmetrik beschrieben. Hierzu werden die Spektren der Einzelfarbstoffe unter Berücksichtigung des Lambert-Beer'schen Gesetzes zu einem Gesamtspektrum berechnet und unter der zugehörigen Beleuchtung, z.B. für Tageslicht die Lichtart D65, gemäß den Regeln der Farbmetrik in die entsprechenden Farborte und Helligkeitswerte umgerechnet. Die Lage des Weißpunktes ist durch die jeweilige Lichtart, z.B. D65 festgelegt und in Tabellen (z.b. obenstehende Literaturstelle) aufgeführt. Durch Änderung der Anteile der verschiedenen Farbstoffverbindungen lassen sich verschiedene Farborte einstellen.

Der Anteil aller Farbstoffverbindungen in der erfindungsgemäßen Mischung, unter Einschluss der mindestens einen Verbindung der Formel (I), beträgt bevorzugt insgesamt 0.01 bis 10 Gew.-%, besonders bevorzugt 0.1 bis 7 Gew.-% und ganz besonders bevorzugt 0.2 bis 5 Gew.-%.

Die Farbstoffverbindungen mit anderer Struktur als Formel (I) sind bevorzugt gewählt aus den in B. Bahadur, Liquid Crystals - Applications and Uses, Vol. 3, 1992, World Scientific Publishing, Abschnitt 11.2.1 angegebenen Farbstoffklassen und besonders bevorzugt aus den in der dort vorhandenen Tabelle aufgeführten expliziten Verbindungen.

Bevorzugt sind die Farbstoffverbindungen mit anderer Struktur als Formel (I) gewählt aus Azoverbindungen, Anthrachinonen, Methinverbindungen, Azomethinverbindungen, Merocyaninverbindungen, Naphthochinonen, Tetrazinen, Perylenen, Terrylenen, Quaterrylenen, höheren Rylenen, Benzothiadiazolen und Pyrromethenen. Besonders bevorzugt sind darunter Perylene, Terrylene, Benzothiadiazole und Azofarbstoffe.

Die genannten Farbstoffe gehören zu den dem Fachmann bekannten Klassen von dichroitischen Farbstoffen, die vielfach in der Literatur beschrieben sind. So sind z.B. Anthrachinonfarbstoffe beschrieben in EP 34832, EP 44893, EP 48583, EP 54217, EP 56492, EP 59036, GB 2065158, GB 2065695, GB 2081736, GB 2082196, GB 2094822, GB 2094825, JP-OS 55-123673, DE 3017877, DE 3040102, DE 3115147, DE 3115762, DE 3150803 und DE 3201120, Naphthochinonfarbstoffe beschrieben in DE 3126108 und DE 3202761, Azofarbstoffe in EP 43904, DE 3123519, WO 82/2054, GB 2079770, JP-OS 56-57850, JP-OS 56-104984, US 4308161, US 4308162, US 4340973, T. Uchida, C. Shishido, H. Seki und M. Wada: Mol. Cryst. Lig. Cryst. 39, 39-52 (1977) und H. Seki, C. Shishido, S. Yasui und T. Uchida: Jpn. J. Appl. Phys. 21, 191-192 (1982), und Rylene beschrieben in EP 2166040, US 2011/0042651, EP 68427, EP 47027, EP 60895, DE 3110960 und EP 698649.

Weiterer Gegenstand der Erfindung ist die Verwendung der erfindungsgemäßen Mischung in einer Vorrichtung zur Regulierung des Licht-Eintritts in einen Raum.

Nochmals weiterer Gegenstand der Erfindung ist eine Vorrichtung zur Regulierung des Licht-Eintritts in einen Raum, enthaltend die erfindungsgemäße Mischung.

Die erfindungsgemäße Mischung liegt in der Vorrichtung bevorzugt in einer Schicht vor. Diese Schicht ist bevorzugt schaltbar, stellt also eine Schaltschicht dar.

In einer bevorzugten Ausführungsform enthält die Schaltschicht der erfindungsgemäßen Vorrichtung eine oder mehrere Quencherverbindungen. Dies ist insbesondere dann bevorzugt, wenn die erfindungsgemäße Vorrichtung in ihrer Schaltschicht einen oder mehrere fluoreszierende Farbstoffe enthält.

Quencherverbindungen sind Verbindungen, welche die Fluoreszenz löschen. Die Quencherverbindungen können in der Schaltschicht die elektronische Anregungsenergie von Nachbarmolekülen, wie z.B. fluoreszierenden Farbstoffen, übernehmen und gehen dabei in einen elektronisch angeregten Zustand über. Der gequenchte fluoreszierende Farbstoff wechselt dadurch in den elektronischen Grundzustand und wird so an der Fluoreszenz oder einer Folgereaktion gehindert. Die Quencherverbindung selbst kehrt durch strahlungslose Desaktivierung oder durch Abgabe von Licht in den Grundzustand zurück und steht zum erneuten Quenchen wieder zur Verfügung.

In der Schaltschicht der erfindungsgemäßen Vorrichtung können der Quencherverbindung unterschiedliche Funktionen zukommen. Zum einen kann die Quencherverbindung zur Verlängerung der Lebensdauer eines Farbstoffsystems, durch Deaktivierung elektronischer Anregungsenergie, beitragen. Zum anderen eliminiert die Quencherverbindung ästhetisch ggfs. unerwünschte zusätzliche Farbeffekte, z.B. farbiges Abstrahlen in den Innenraum, die von den fluoreszierenden Farbstoffen in der Schaltschicht ausgehen.

Um ein effektives Quenchen zu erzielen, ist die Quencherverbindung dem jeweiligen Farbstoffsystem, insbesondere dem längstwelligst absorbierenden Farbstoff einer Farbstoffkombination, anzupassen. Wie dies zu tun ist, ist dem Fachmann bekannt.

Bevorzugte Quencherverbindungen sind beispielweise in Tabelle 8.1 auf Seite 279 in Joseph R. Lakowicz, Principles of Fluorescence Spectroscopy, 3rd Edition, 2010, ISBN 10: 0-387-31278-1, Verlag Springer Science+Business Media LLC, beschrieben. Weitere Molekülklassen sind beispielsweise unter den Stichworten Dark-Quencher oder Black Hole Quencher dem Fachmann geläufig. Beispiele sind Azofarbstoffe und Aminoanthrachinone. In der Schaltschicht der erfindungsgemäßen Vorrichtung können als Quencherverbindungen auch nicht-fluoreszierende oder nur im NIR fluoreszierende Farbstoffe zum Einsatz kommen.

In einer bevorzugten Ausführungsform der erfindungsgemäßen Schaltschicht sind gegebenenfalls enthaltene Quencherverbindungen so gewählt, dass die Fluoreszenz im sichtbaren Teil des Spektrums unterdrückt wird.

Die erfindungsgemäße Vorrichtung ist bevorzugt zur Regulierung des Licht-Eintritts in Form von von der Sonne ausgehendem Licht von der Umgebung in einen Raum geeignet. Dabei erfolgt der zu regulierende Licht-Eintritt von der Umwelt (dem Außenraum) in einen Raum hinein. Der Raum kann dabei ein beliebiger weitgehend von der Umgebung abgeschlossener Raum sein, beispielsweise ein Gebäude, ein Fahrzeug, oder ein Container. Die Vorrichtung kann allgemein für beliebige Räume verwendet werden, besonders wenn diese nur begrenzten Luftaustausch mit der Umgebung aufweisen und lichtdurchlässige Begrenzungsflächen aufweisen, durch die Energie-Eintrag von außen in Form von Lichtenergie stattfinden kann. Besonders relevant ist die Verwendung der Vorrichtung für Räume, welche starker Sonneneinstrahlung durch lichtdurchlässige Flächen, beispielsweise durch Fensterflächen, ausgesetzt sind.

Gegenstand der Erfindung ist daher weiterhin die Verwendung der erfindungsgemäßen Vorrichtung zur Regulierung des Licht-Eintritts in einen Raum.

In einer alternativen Verwendung wird die Vorrichtung zur Regulierung des Lichteinfalls auf die Augen eingesetzt, beispielsweise in Schutzbrillen, Visieren oder Sonnenbrillen, wobei die Vorrichtung in einem Schaltzustand den Lichteinfall auf die Augen gering hält, und in einem anderen Schaltzustand den Lichteinfall weniger stark verringert.

Die erfindungsgemäße Vorrichtung ist bevorzugt in einer Öffnung einer größeren flächigen Struktur angeordnet, wobei die flächige Struktur selbst nicht oder nur geringfügig Licht-Eintritt zulässt, und wobei die Öffnung relativ gesehen lichtdurchlässiger ist. Bevorzugt ist die flächige Struktur eine Wand oder eine sonstige Begrenzung eines Raums nach außen. Weiterhin bevorzugt bedeckt die flächige Struktur eine mindestens genauso große Fläche, besonders bevorzugt eine mindestens doppelt so große Fäche wie die Öffnung in ihr, in der die erfindungsgemäße Vorrichtung angeordnet ist.

Bevorzugt ist die erfindungsgemäße Vorrichtung dadurch gekennzeichnet, dass sie eine Flächenausdehnung von mindestens 0.05 m² aufweist, bevorzugt mindestens 0.1 m², besonders bevorzugt mindestens 0.5 m² und ganz besonders bevorzugt mindestens 0.8 m².

Die erfindungsgemäße Vorrichtung ist schaltbar. Unter Schaltung wird dabei eine Änderung des Licht-Durchtritts durch die Vorrichtung verstanden. Die erfindungsgemäße Vorrichtung ist bevorzugt elektrisch schaltbar.

Ist die Vorrichtung elektrisch schaltbar, umfasst sie bevorzugt zwei oder mehr Elektroden, die zu beiden Seiten der Schaltschicht enthaltend die erfindungsgemäße Mischung angebracht sind. Die Elektroden bestehen bevorzugt aus ITO oder aus einer dünnen, bevorzugt transparenten Metall- und/oder Metalloxidschicht, beispielsweise aus Silber oder FTO (Fluordotiertes Zinnoxid) oder einem alternativen, dem Fachmann für diese Verwendung bekannten Material. Die Elektroden sind bevorzugt mit elektrischen Anschlüssen versehen. Die Spannung wird bevorzugt durch eine Batterie, einen Akkumulator, oder durch externe Stromversorgung bereitgestellt.

Der Schaltvorgang erfolgt im Fall von elektrischer Schaltung durch eine Ausrichtung der Moleküle der erfindungsgemäßen Mischung durch das Anlegen von Spannung.

In einer bevorzugten Ausführungsform wird dabei die Vorrichtung durch Anlegen einer Spannung von einem Zustand mit hoher Absorption, d. h. geringer Lichtdurchlässigkeit, der ohne Spannung vorliegt, in einen Zustand mit geringerer Absorption, d. h. höherer Lichtdurchlässigkeit, überführt. Bevorzugt ist die erfindungsgemäße Mischung in der Schicht in der Vorrichtung in beiden Zuständen nematisch. Der spannungslose Zustand ist bevorzugt dadurch gekennzeichnet, dass die Moleküle der Mischung, und damit die Moleküle der Verbindung der Formel (I), parallel zur Ebene der Schaltschicht ausgerichtet vorliegen. Dies wird bevorzugt durch eine entsprechend gewählte Orientierungsschicht erreicht. Der Zustand unter Spannung ist bevorzugt dadurch gekennzeichnet, dass die Moleküle der Mischung, und damit die Moleküle der Verbindung der Formel (I), senkrecht zur Ebene der Schaltschicht vorliegen.

In einer zur oben genannten Ausführungsform alternativen Ausführungsform wird die Vorrichtung durch Anlegen einer Spannung von einem Zustand mit geringer Absorption, d. h. hoher Lichtdurchlässigkeit, der ohne Spannung vorliegt, in einen Zustand mit höherer Absorption, d. h. geringerer Lichtdurchlässigkeit, überführt. Bevorzugt ist die erfindungsgemäße Mischung in der Schicht in der Vorrichtung in beiden Zuständen nematisch. Der spannungslose Zustand ist bevorzugt dadurch gekennzeichnet, dass die Moleküle der Mischung, und damit die Moleküle der Verbindung der Formel (I), senkrecht zur Ebene der Schaltschicht ausgerichtet vorliegen. Dies wird bevorzugt durch eine entsprechend gewählte Orientierungsschicht erreicht. Der Zustand unter Spannung ist bevorzugt dadurch gekennzeichnet, dass die Moleküle der Mischung, und damit die Moleküle der Verbindung der Formel (I), parallel zur Ebene der Schaltschicht vorliegen.

Gemäß einer bevorzugten Ausführungsform der Erfindung kann die Vorrichtung ohne externe Stromversorgung betrieben werden, indem die nötige Energie durch eine Solarzelle oder eine sonstige Vorrichtung zur Umwandlung von Licht und/oder Wärmeenergie in elektrische Energie bereitgestellt wird, die mit der Vorrichtung verbunden ist. Die Bereitstellung der Energie durch die Solarzelle kann direkt oder indirekt, d. h. über eine dazwischengeschaltete Batterie oder Akkumulator oder sonstige Einheit zur Speicherung von Energie, erfolgen. Bevorzugt ist die Solarzelle außen an der Vorrichtung angebracht oder sie ist innerer Bestandteil der Vorrichtung, wie beispielsweise in WO 2009/141295 offenbart. Bevorzugt sind dabei insbesondere Solarzellen, welche bei diffusem Licht besonders effizient sind, sowie transparente Solarzellen.

Die erfindungsgemäße Vorrichtung weist bevorzugt die folgende Schichtenabfolge auf, wobei zusätzlich weitere Schichten vorhanden sein können. Bevorzugt grenzen die im Folgenden angegebenen Schichten in der Vorrichtung direkt aneinander.
- Substratschicht, bevorzugt aus Glas oder Polymer
- elektrisch leitfähige transparente Schicht, bevorzugt aus ITO
- Orientierungsschicht
- Schaltschicht, enthaltend die erfindungsgemäße Mischung
- Orientierungsschicht
- elektrisch leitfähige transparente Schicht, bevorzugt aus ITO
- Substratschicht, bevorzugt aus Glas oder Polymer

Die bevorzugten Ausführungsformen der einzelnen Schichten werden im Folgenden dargestellt.

Bevorzugt umfasst die erfindungsgemäße Vorrichtung eine oder mehrere, besonders bevorzugt zwei Orientierungsschichten. Die Orientierungsschichten liegen bevorzugt direkt angrenzend an die beiden Seiten der Schicht enthaltend die erfindungsgemäße Mischung vor.

Als Orientierungsschichten der erfindungsgemäßen Vorrichtung können beliebige dem Fachmann hierzu bekannte Schichten verwendet werden. Bevorzugt sind Polyimid-Schichten, besonders bevorzugt Schichten aus geriebenem Polyimid. Auf bestimmte, dem Fachmann bekannte Art geriebenes Polyimid führt zu einer Ausrichtung der Moleküle des flüssigkristallinen Mediums in Reiberichtung, wenn die Moleküle parallel zur Orientierungsschicht vorliegen (planare Ausrichtung). Dabei ist es bevorzugt, dass die Moleküle des flüssigkristallinen Mediums nicht völlig planar auf der Orientierungsschicht vorliegen, sondern einen leichten Aufstellwinkel aufweisen (pretilt). Zum Erreichen von vertikaler Ausrichtung der Verbindungen des flüssigkristallinen Mediums zur Oberfläche der Orientierungsschicht (homeotrope Ausrichtung) wird bevorzugt auf bestimmte Art behandeltes Polyimid als Material für die Orientierungsschicht eingesetzt (Polyimid für sehr hohe Pretiltwinkel). Weiterhin können Polymere, die durch einen Belichtungsvorgang mit polarisiertem Licht erhalten wurden, als Orientierungsschicht zum Erreichen einer Ausrichtung der Verbindungen des flüssigkristallinen Mediums gemäß einer Orientierungsachse verwendet werden (photoalignment).

Weiterhin bevorzugt ist in der erfindungsgemäßen Vorrichtung die Schicht enthaltend die erfindungsgemäße Mischung zwischen zwei Substratschichten angeordnet bzw. von diesen eingeschlossen. Die Substratschichten können beispielsweise aus Glas oder einem Polymer, bevorzugt einem lichtdurchlässigen Polymer, bestehen.

Bevorzugt ist die Vorrichtung dadurch gekennzeichnet, dass sie keinen Polarisator auf Polymerbasis, besonders bevorzugt keinen in fester Materiephase vorliegenden Polarisator und ganz besonders bevorzugt überhaupt keinen Polarisator umfasst.

Die Vorrichtung kann jedoch gemäß einer alternativen Ausführungsform auch einen oder mehrere Polarisatoren aufweisen. Bevorzugt sind die Polarisatoren in diesem Fall Linearpolarisatoren.

Wenn genau ein Polarisator vorhanden ist, so ist dessen Absorptionsrichtung bevorzugt senkrecht stehend zur Orientierungsachse der Verbindungen des flüssigkristallinen Mediums der erfindungsgemäßen Vorrichtung auf derjenigen Seite der Schaltschicht, auf der sich der Polarisator befindet.

In der erfindungsgemäßen Vorrichtung können sowohl absorptive als auch reflektive Polarisatoren eingesetzt werden. Bevorzugt werden Polarisatoren verwendet, die als dünne optische Filme vorliegen. Beispiele für reflektive Polarisatoren, die in der erfindungsgemäßen Vorrichtung verwendet werden können, sind DRPF- (diffusive reflective polariser film, 3M), DBEF- (dual brightness enhanced film, 3M), DBR- (layered-polymer distributed Bragg reflectors, wie in US 7,038,745 und US 6,099,758 beschrieben) und APF-Filme (advanced polariser film, 3M, vgl. Technical Digest SID 2006, 45.1, US 2011/0043732 und US 7023602). Weiterhin können Polarisatoren basierend auf Drahtgittern (WGP, wire-gridpolarisers), welche Infrarotlicht reflektieren, eingesetzt werden. Beispiele für absorptive Polarisatoren, welche in den erfindungsgemäßen Vorrichtungen eingesetzt werden können, sind der Itos XP38-Polarisatorfilm und der Nitto Denko GU-1220DUN-Polarisatorfilm. Ein Beispiel für einen circularen Polarisator, welcher erfindungsgemäß verwendet werden kann, ist der Polarisator APNCP37-035-STD (American Polarizers). Ein weiteres Beispiel ist der Polarisator CP42 (ITOS).

Weiterhin bevorzugt enthält erfindungsgemäße Vorrichtung ein Lichtleitsystem, das Licht zu einer Solarzelle oder einer sonstigen Vorrichtung zur Umwandlung von Licht und/oder Wärmeenergie in elektrische Energie leitet, bevorzugt wie in WO 2009/141295 beschrieben. Das Lichtleitsystem sammelt und konzentriert Licht, das auf die Vorrichtung trifft. Bevorzugt sammelt und konzentriert es Licht, das von fluoreszierenden dichroitischen Farbstoffen in der Schaltschicht emittiert wird. Das Lichtleitsystem steht mit einer Vorrichtung zur Umwandlung von Lichtenergie in elektrische Energie, bevorzugt einer Solarzelle, in Kontakt, so dass das gesammelte Licht konzentriert auf diese trifft. In einer bevorzugten Ausführungsform der Erfindung ist die Vorrichtung zur Umwandlung von Lichtenergie in elektrische Energie am Rand der Vorrichtung angebracht, in diese integriert und elektrisch mit Mitteln zur elektrischen Schaltung der erfindungsgemäßen Vorrichtung verbunden.

In einer bevorzugten Ausführungsform ist die erfindungsgemäße Vorrichtung Bestandteil eines Fensters, besonders bevorzugt eines Fensters enthaltend mindestens eine Glasfläche, ganz besonders bevorzugt eines Fensters, welche Mehrscheiben-Isolierglas enthält.

Unter Fenster wird dabei insbesondere eine Struktur in einem Gebäude verstanden, welche einen Rahmen und mindestens eine von diesem Rahmen umfasste Glasscheibe enthält. Bevorzugt enthält sie einen wärmeisolierenden Rahmen und zwei oder mehr Glasscheiben (Mehrscheiben-Isolierglas).

Gemäß einer bevorzugten Ausführungsform ist die erfindungsgemäße Vorrichtung direkt auf einer Glasfläche eines Fensters aufgebracht, besonders bevorzugt im Zwischenraum zwischen zwei Glasscheiben von Mehrscheiben-Isolierglas.

Ein Fenster enthaltend eine erfindungsgemäße Vorrichtung, bevorzugt mit den oben angegebenen bevorzugten Merkmalen, ist weiterer Gegenstand der Erfindung.

### Ausführungsbeispiele

### A) Synthesen von Verbindungen der Formel (I)

A-1) Verbindung F1:
Die Verbindung F1 wird wie im folgenden Schema gezeigt hergestellt: 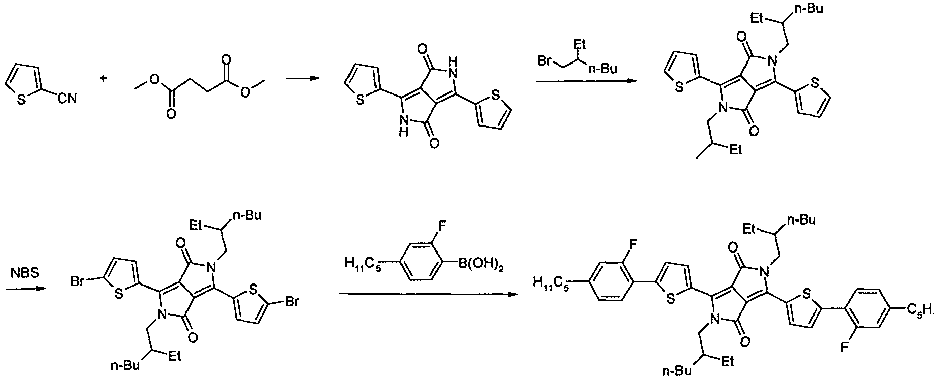 Dabei werden die ersten drei Syntheseschritte durchgeführt wie in S. P. Mishra et al, Synthetic Metals, 2010, 2422-2429, angegeben.
Für den letzten Syntheseschritt werden 2.0 g (2.93 mmol) der Diketopyrrolopyrrol-Vorstufe und 1.29 g (6.15 mmol) der Boronsäure und 2.84 g Na₂CO₃ in einem Toluol-Wasser-Gemisch gelöst. Die Lösung wird mit Ar gespült und dann auf 50 °C erhitzt. Dann werden 26.8 mg (0.03 mmol) Pd₂(dba)₃ und 35.7 mg (0.12 mmol) Tris-(ortho-tolyl)phosphin auf einmal hinzugegeben, und die Lösung wird unter Rückfluss auf 90°C erhitzt. Nach einer Stunde Reaktionszeit wird die Mischung durch Filtration über Celite 545 aufgearbeitet. Die Lösung wird mit Wasser gewaschen. Nach Entfernen des Lösungsmittels wird das Rohprodukt als dunkelgrüner Feststoff erhalten. Dieser wird aus Toluol umkristallisiert. Dabei wird das Produkt in einer Reinheit von 99.9 % (HPLC) und in einer Ausbeute von 69 % erhalten.
A-2) Auf analoge Weise werden aus dem Edukt 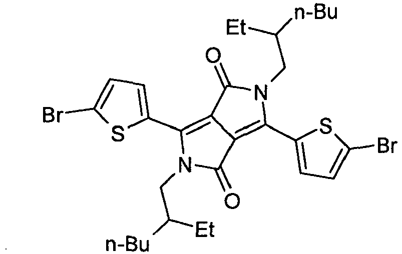 durch Umsetzung mit den unten angegebenen alternativen Boronsäure-Derivaten die folgenden Verbindungen hergestellt:

| Name | Edukt | Ausbeute | Reinheit |
|---|---|---|---|
| F2 | 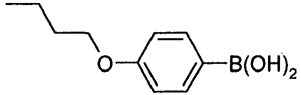 | 43 % | 99.7 % (HPLC) |
| F3 | 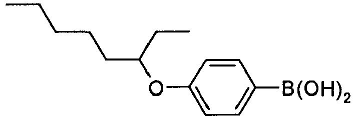 | 51 % | 98.1 % (HPLC) |
| F3B | 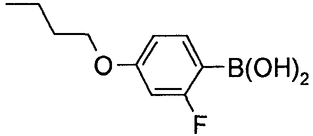 | n. best. | n. best. |

A-3) Auf analoge Weise wie bei der Synthese von F1 (vgl. S. P. Mishra et al, Synthetic Metals, 2010, 2422-2429) wird auf dem folgenden Syntheseweg die Verbindung F3C hergestellt: 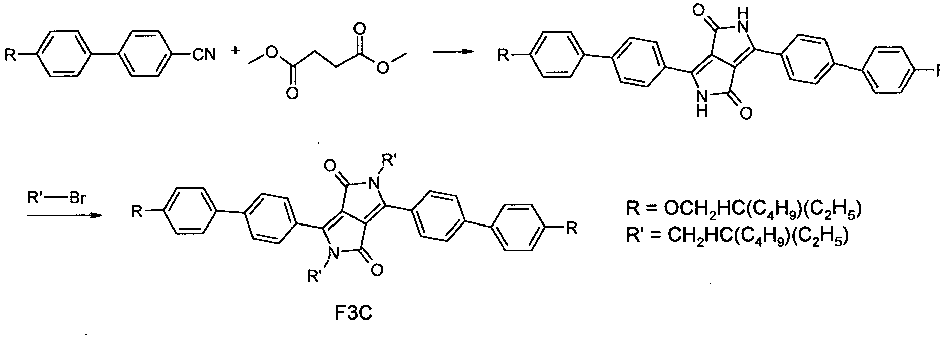
A-4) Auf analogem Syntheseweg wird unter Verwendung von 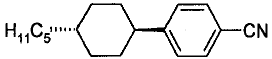 als Nitrilkomponente und Dimethylsulfat als Alkylierungsmittel im letzten Schritt die Verbindung F3A hergestellt: 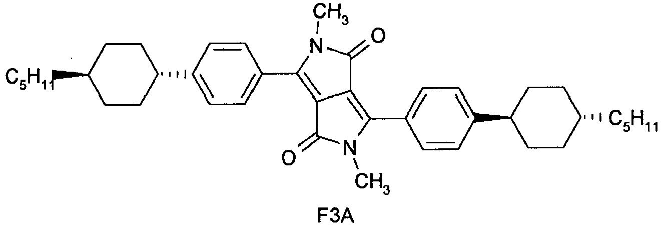
A-5) Als weitere Verbindung gemäß Formel (I) kann beispielsweise die folgende Verbindung F3D kommerziell (Aldrich) bezogen werden:

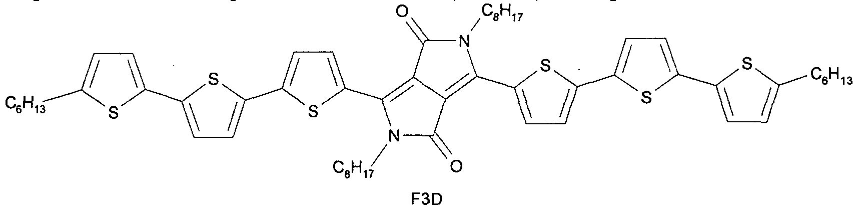

### B) Mischungen enthaltend Verbindungen der Formel (I) und ihre Eigenschaften

B-1) Es wurde eine Lösung je einer der Verbindungen F1, F2, F3, F3A und F3B gemäß der Erfindung und einer Verbindung F4 als Vergleich (Strukturen s. Tabelle 1) in der Host-Mischung H1 (Zusammensetzung s. Tabelle 2) hergestellt.

| **Tabelle 1** |
|---|
| 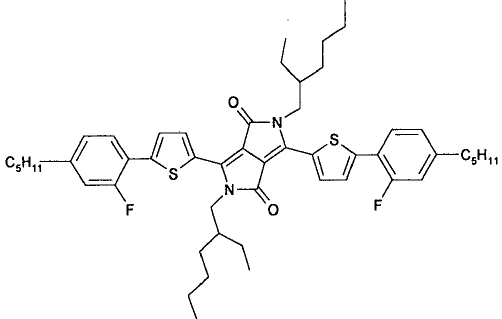 |
| F1 |
| 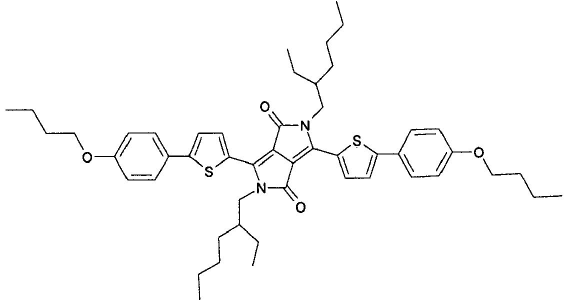 |
| F2 |
| 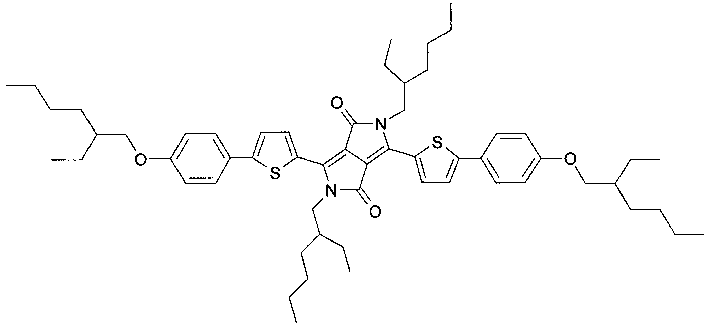 |
| F3 |
| 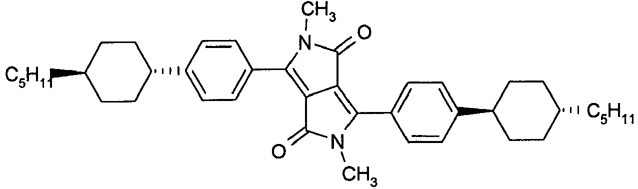 |
| F3A |
| 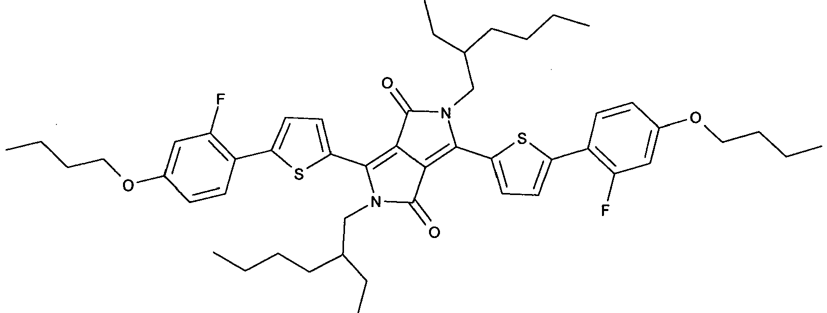 |
| F3B |
| 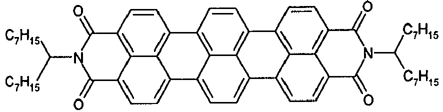 |
| F4 |

| **Tabelle 2** | | |
|---|---|---|
| | **H1** | |
| Zusammensetzung | Verbindung | % |
| | CPG-3-F | 5 |
| | CPG-5-F | 5 |
| | CPU-3-F | 15 |
| | CPU-5-F | 15 |
| | CP-3-N | 16 |
| | CP-5-N | 16 |
| | CCGU-3-F | 7 |
| | CGPC-3-3 | 4 |
| | CGPC-5-3 | 4 |
| | CGPC-5-5 | 4 |
| | CCZPC-3-3 | 3 |
| | CCZPC-3-4 | 3 |
| | CCZPC-3-5 | 3 |

Die Mischungen je mit Farbstoff F1, F2, F3, F3A, F3B oder F4 werden charakterisiert in Bezug auf ihr Absorptionsmaximum, ihren Anisotropiegrad der Absorption R, ihre Fluoreszenzintensität, ihre Lichtstabilität und die Stabilität der Lösung bei hoher und bei niedriger Temperatur.
Für die Bestimmung von R wird ein dem Fachmann geläufiges Verfahren angewendet. Es ist im Einzelnen in WO 2014/090367 offenbart. Die Fluoreszenzintensität (willkürliche Einheiten) wird zur besseren Vergleichbarkeit bei einer Konzentration c* des Farbstoffs bestimmt, bei der eine TN-Zelle enthaltend die Mischung mit 25 µm Schichtdicke einen Dunkelzustand mit 35% Transmission aufweist. Die Lichtstabilität (Fading) wird durch andauernde Belichtung ermittelt. Die Stabilität der Lösung wird bestimmt, indem eine Lösung des Farbstoffs in der angegebenen Konzentration gelagert wird, bis spektroskopisch erkennbare Ausfällung auftritt.

| **Tabelle 3** | | | | | | | |
|---|---|---|---|---|---|---|---|
| Farbstoff in Mischung | Absorpt.-Max. / nm | Isotroper Ext.-Koeff. εᵢₛₒ | Anisotropie R | Fluoreszenz bei c* (a.u.) | Fading (Wochen) | Lösl.-Stabilität (Wochen bei conc.) | Lösl.-Stabilität -20°C (Wochen bei conc.) |
| F1 in H1 | 617 | 810 | 0.78 | 2485 | >29 (98%) | 12 bei 2.6% | 12 bei 1.5% |
| F2 in H1 | 623 | 877 | 0.78 | 2802 | 17 (80%) | n. best. | n. best. |
| F3 in H1 | 624 | 770 | 0.74 | 2983 | 10 (80%) | 12 bei 1.4% | 12 bei 0.8% |
| F3A in H1 | 506 | 628 | 0.41 | n. best. | n. best. | n. best. | n. best. |
| F3B in H1 | 620 | 870 | 0.79 | n. best. | n. best. | n. best. | n. best. |
| F4 in H1 (Vgl.) | 657 | 832 | 0.76 | 2360 | 26 (98%) | 8 bei 0.4% | 8 bei 1.3% |

B-2) Es wurden weitere erfindungsgemäße Mischungen hergestellt. Diese enthalten je einen der Farbstoffe F1, F2 und F3 in den flüssigkristallinen Mischungen H2 bzw. H3 (Zusammensetzung siehe Tabelle 4).

| **Tabelle 4** | | | | |
|---|---|---|---|---|
| | **H2** | | **H3** | |
| Zusammensetzung | | | | |
| | CY-3-O2 | 12 | CCN-33 | 10 |
| | CY-5-O2 | 12 | CCN-47 | 10 |
| | CCY-3-O2 | 13 | CCN-57 | 10 |
| | CCY-5-O2 | 13 | CY-3-O2 | 5 |
| | CCY-3-1 | 8 | NCB-53 | 13 |
| | CCZC-3-3 | 4 | CCY-3-O2 | 5 |
| | CCZC-3-5 | 3 | CCY-3-O3 | 5 |
| | CCZC-4-3 | 3 | CCY-4-O2 | 6 |
| | CC-3-4 | 6 | CPY-2-O2 | 9 |
| | CC-3-5 | 6 | CPY-3-O2 | 8 |
| | CC-3-O3 | 8 | PYP-2-3 | 7 |
| | CC-5-O1 | 4 | PYP-2-4 | 6 |
| | CC-5-O2 | 4 | CGPC-3-3 | 2 |
| | CP-3-O2 | 4 | CGPC-5-3 | 2 |
| | | | CGPC-5-5 | 2 |

Damit werden die folgenden Ergebnisse für die Löslichkeits-Stabilität erhalten (die Angaben in % bezeichnen dabei Gew.-%):

| **Tabelle 5** | | |
|---|---|---|
| Farbstoff in Mischung | Lösl.-Stabilität | Lösl.-Stabilität |
| | +20°C (Wochen bei conc.) | -20°C (Wochen bei conc.) |
| F1 in H2 | 12 bei | 12 bei |
| | 1.2% | 1.4% |
| F3 in H2 | 12 bei | 12 bei |
| | 0.8% | 0.9% |
| F1 in H3 | 12 bei | 12 bei |
| | 2.2% | 1.7% |
| F3 in H3 | 12 bei | 12 bei |
| | 1.3% | 0.8% |

Die Mischungen enthaltend den Farbstoff F1, F2 oder F3 zeichnen sich durch eine sehr starke Fluoreszenz aus. Weiterhin weisen sie einen hohen Anisotropiegrad und eine hohe Licht- und Lösungsstabilität auf. Dies wird für die drei flüssigkristallinen Mischungen H1, H2 und H3 gezeigt.
Aufgrund dieser Eigenschaften sind die Verbindungen hervorragend zur Verwendung als flüssigkristalline Medien in Displays oder in Vorrichtungen zur Regulierung des Licht-Eintritts in einen Raum (Smart Windows) geeignet.
B-3) Als weitere Untersuchungsmethode wurden die Verbindungen F1, F3 und F4 in den flüssigkristallinen Mischungen H1, H2 und H4 (Zusammensetzung s. unten) gelöst. Die erhaltenen Mischungen wurden nach einer neuen Methode untersucht (Spektroskopische Untersuchung der Löslichkeit in übersättigten Lösungen). Dabei wurden die folgenden Ergebnisse erhalten (die Angaben in % bezeichnen dabei Gew.-%):

| | F4 (Vgl.) | | F1 | | F3 | |
|---|---|---|---|---|---|---|
| | +20°C | -20°C | +20°C | -20°C | +20°C | -20°C |
| H1 | 0.74% | 1.37% | 2.75% | 1.98% | 2.04% | 1.22% |
| H2 | 0.11% | 0.28% | 1.55% | 2.14% | 1.07% | 1.87% |
| H4 | 0.06% | 0.04% | 1.45% | 1.64% | n. best. | n.best. |

| | **H4** | |
|---|---|---|
| Zusammensetzung | | |
| | CY-3-O2 | 9 |
| | CY-3-O4 | 9 |
| | CY-5-O2 | 12 |
| | CY-5-O4 | 8 |
| | CCY-3-O2 | 5 |
| | CCY-3-O3 | 5 |
| | CCY-4-O2 | 5 |
| | CPY-2-O2 | 7 |
| | CPY-3-O2 | 6 |
| | PYP-2-3 | 12 |
| | CCP-V-1 | 6 |
| | CCZPC-3-3 | 3 |
| | CCZPC-3-4 | 3 |
| | CGPC-3-3 | 5 |
| | CGPC-5-3 | 5 |

Die Ergebnisse zeigen deutlich die Vorteile der erfindungsgemäßen Mischungen enthaltend das Material F1 bzw. F3 in Bezug auf Mischungen enthaltend das Vergleichsmaterial F4. Dabei bedeutet in obenstehender Tabelle der niedrigste ermittelte Wert für die Löslichkeit bei 20°C oder bei -20°C jeweils die höchste technisch einsetzbare Konzentration.

Im Einzelnen verdeutlichen die obenstehenden Ergebnisse, dass F1 und F3 in deutlich höheren Konzentrationen in H1 und H2 einsetzbar sind als F4. In der Mischung H4 ist F4 überhaupt nicht einsetzbar, da nur vernachlässigbar löslich. Hingegen ist F1 in der Mischung H4 löslich und kann somit eingesetzt werden.

### C) Herstellung von erfindungsgemäßen Vorrichtungen (Smart Windows)

In der flüssigkristallinen Mischung H1 (s.o.) werden die in der folgenden Tabelle 6 gezeigten Farbstoffe F1, F4, F5 und F6 in den dort angegebenen Mengen gelöst.

| **Tabelle 6** |
|---|
| 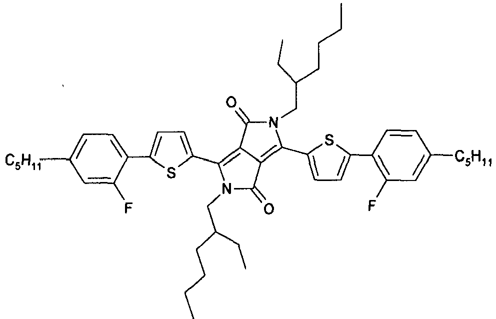 |
| F1: 0.152 Gew.-% |
| |
| 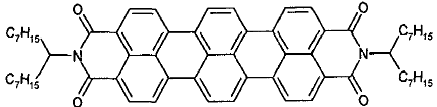 |
| F4: 0.118 Gew.-% |
| |
| 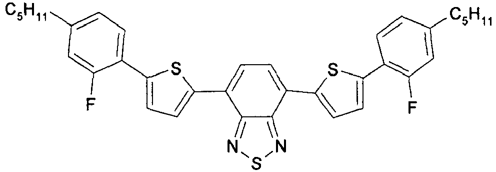 |
| F5: 0.138 Gew.-% |
| |
| 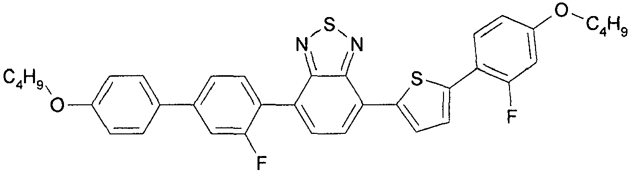 |
| F6: 0.277 Gew.-% |

Die Mischung enthaltend die vier Farbstoffe F1, F4, F5 und F6 wird in eine einzelne Wirt-Gast-Zelle, wie in WO 2014/090373 beschrieben, eingebracht. Die Zelle weist eine Schichtdicke von 23.6 µm auf. Die Zelle wird von Hell nach Dunkel geschaltet, und es wird der Lichttransmissionsgrad τᵥ, berechnet nach der Europäischen Norm EN410, Gleichung (1), jeweils für beide Zustände ermittelt. Auch wird der Farbort der Vorrichtung bestimmt in CIE x,y-Koordinaten.

Weiterhin wird die Mischung enthaltend die vier Farbstoffe F1, F4, F5 und F6 in eine Wirt-Gast-Doppelzelle, wie in der noch nicht offengelegten Anmeldung EP13002445.8 beschrieben, eingebracht. Die Zelle weist eine Schichtdicke von 23.6 µm auf. Es werden die gleichen Parameter bestimmt wie für die einzelne Wirt-Gast-Zelle.

Die Ergebnisse der Messungen sind in der folgenden Tabelle 7 zusammengefasst.

| **Tabelle 7** | | | | |
|---|---|---|---|---|
| | Zustand | CIE x | CIE y | τᵥ |
| Einzelzelle | Dunkel | 0.311 | 0.333 | 51,8% |
| | Hell | 0.313 | 0.331 | 84,3% |
| | | | | |
| Doppelzelle | Dunkel | 0.306 | 0.345 | 16,3% |
| | Hell | 0.312 | 0.332 | 71,1 % |

Die Ergebnisse zeigen, dass mit der erfindungsgemäßen Farbstoffmischung Vorrichtungen zur Regulierung des Licht-Eintritts in einen Raum hergestellt werden können, die einen hohen Hub der Lichttransmission beim Schalten von Hell zu Dunkel, kombiniert mit einem nahezu idealen Farbort (schwarz/weiß) aufweisen.

## Patentansprüche

1. Flüssigkristalline Mischung, enthaltend mindestens eine Verbindung gemäß der Formel (I) 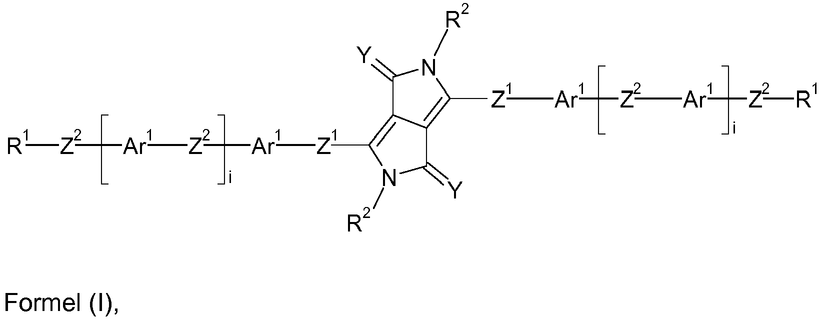 wobei für die auftretenden Symbole gilt:
Y ist O;
Z¹ ist eine Einfachbindung;
Z² ist bei jedem Auftreten gleich oder verschieden eine Einfachbindung oder eine Gruppe gewählt aus O, S, -C(R³)₂-, -C(R³)₂O-, -OC(R³)₂-, -CR³=CR³- und -C≡C-, oder zwei, drei, vier oder fünf miteinander kombinierte Gruppen, gewählt aus den genannten Gruppen;
Ar¹ ist bei jedem Auftreten gleich oder verschieden eine Aryl- oder Heteroarylgruppe mit 5 bis 30 aromatischen Ringatomen, die mit einem oder mehreren Resten R⁴ substituiert sein kann;
R¹ ist bei jedem Auftreten gleich oder verschieden F oder eine geradkettige Alkyl- oder Alkoxylgruppe mit 3 bis 12 C-Atomen, die mit einem oder mehreren Resten R⁵ substituiert sein kann, oder eine verzweigte Alkyl- oder Alkoxygruppe mit 3 bis 12 C-Atomen, die mit einem oder mehreren Resten R⁵ substituiert sein kann, oder eine cyclische Alkylgruppe mit 6 C-Atomen, die mit einem oder mehreren Resten R⁵ substituiert sein kann, wobei in den Alkyl- und Alkoxygruppen eine oder mehrere CH₂-Gruppen durch -O- oder -S- ersetzt sein können;
R^{Y}, R², R³, R⁴ sind bei jedem Auftreten gleich oder verschieden H, D, F, Cl, CN, N(R⁵)₂, eine Alkyl-, Alkoxy- oder Thioalkoxygruppe mit 1 bis 15 C-Atomen oder eine Alkenyl- oder Alkinylgruppe mit 2 bis 15 C-Atomen, wobei die oben genannten Gruppen jeweils mit einem oder mehreren Resten R⁵ substituiert sein können und wobei eine oder mehrere CH₂-Gruppen in den oben genannten Gruppen durch-R⁵C=CR⁵-, -C≡C-, C=O, C=S, -C(=O)O-, -O(C=O)-, Si(R⁵)₂, NR⁵, -O- oder -S- ersetzt sein können, oder eine Aryl- oder Heteroarylgruppe mit 5 bis 30 aromatischen Ringatomen, die jeweils mit einem oder mehreren Resten R⁵ substituiert sein kann;
R⁵ ist bei jedem Auftreten gleich oder verschieden H, D, F, Cl, CN, N(R⁶)₂, eine Alkyl-, Alkoxy- oder Thioalkoxygruppe mit 1 bis 15 C-Atomen oder eine Alkenyl- oder Alkinylgruppe mit 2 bis 15 C-Atomen, wobei die oben genannten Gruppen jeweils mit einem oder mehreren Resten R⁶ substituiert sein können und wobei eine oder mehrere CH₂-Gruppen in den oben genannten Gruppen durch -R⁶C=CR⁶-, -C≡C-, C=O, C=S, -C(=O)O-, -O(C=O)-, Si(R⁶)₂, NR⁶, -O- oder -S- ersetzt sein können, oder eine Aryl- oder Heteroarylgruppe mit 5 bis 30 aromatischen Ringatomen, die jeweils mit einem oder mehreren Resten R⁶ substituiert sein kann;
R⁶ ist bei jedem Auftreten gleich oder verschieden H, F oder ein aliphatischer organischer Rest mit 1 bis 20 C-Atomen, in dem ein oder mehrere H-Atome durch F ersetzt sein können, oder eine Aryl- oder Heteroarylgruppe mit 5 bis 20 C-Atomen, in der ein oder mehrere H-Atome durch F ersetzt werden können;
i ist bei jedem Auftreten gleich oder verschieden 0, 1, 2, 3 oder 4;
sowie mindestens eine weitere Verbindung, die gewählt ist aus flüssigkristallinen Verbindungen,
wobei die mindestens eine Verbindung gemäß der Formel (I) in Lösung vorliegt.

2. Mischung nach Anspruch 1, **dadurch gekennzeichnet, dass** in Formel (I) Z² bei jedem Auftreten gleich oder verschieden eine Einfachbindung oder eine Gruppe gewählt aus -CH₂CH₂-, -CF₂CF₂-, -OCH₂-, -OCF₂-, -CH₂O-, -CF₂O-, -CH=CH-, -CF=CF- und -C≡C- ist.

3. Mischung nach Anspruch 1 oder 2, **dadurch gekennzeichnet, dass** in Formel (I) Ar¹ bei jedem Auftreten gleich oder verschieden eine Arylgruppe mit 6 bis 13 aromatischen Ringatomen, die mit einem oder mehreren Resten R⁴ substituiert sein kann, oder eine Heteroarylgruppe mit 5 bis 13 aromatischen Ringatomen, die mit einem oder mehreren Resten R⁴ substituiert sein, ist.

4. Mischung nach einem oder mehreren der Ansprüche 1 bis 3, **dadurch gekennzeichnet, dass** in Formel (I) Ar¹ bei jedem Auftreten gleich oder verschieden gewählt ist aus Benzol, Fluoren, Naphthalin, Pyridin, Pyrimidin, Pyrazin, Triazin, Thiophen, Benzothiophen, Dibenzothiophen, Furan, Benzofuran, Dibenzofuran, Indol, Carbazol, Thiazol, Benzothiazol und Chinolin, die jeweils mit einem oder mehreren Resten R⁴ substituiert sein können.

5. Mischung nach einem oder mehreren der Ansprüche 1 bis 4, **dadurch gekennzeichnet, dass** in Formel (I) R² bei jedem Auftreten gleich oder verschieden eine Alkylgruppe mit 1 bis 12 C-Atomen, die mit einem oder mehreren Resten R⁵ substituiert sein kann, ist.

6. Mischung nach einem oder mehreren der Ansprüche 1 bis 5, **dadurch gekennzeichnet, dass** in Formel (I) i bei jedem Auftreten gleich oder verschieden 1 oder 2 ist.

7. Mischung nach einem oder mehreren der Ansprüche 1 bis 6, **dadurch gekennzeichnet, dass** der Anisotropiegrad R der Verbindung der Formel (I) größer als 0,6 ist.

8. Mischung nach einem oder mehreren der Ansprüche 1 bis 7, **dadurch gekennzeichnet, dass** sie genau eine, zwei, drei oder vier verschiedene Verbindungen der Formel (I) enthält.

9. Mischung nach einem oder mehreren der Ansprüche 1 bis 8, **dadurch gekennzeichnet, dass** sie 3 bis 25 verschiedene flüssigkristalline Verbindungen enthält.

10. Mischung nach einem oder mehreren der Ansprüche 1 bis 9, **dadurch gekennzeichnet, dass** sie ein thermotropes flüssigkristallines Material darstellt.

11. Mischung nach einem oder mehreren der Ansprüche 1 bis 10, **dadurch gekennzeichnet, dass** die mindestens eine weitere Verbindung, die gewählt ist aus flüssigkristallinen Verbindungen, zwei, drei oder vier Strukturelemente basierend auf 1,4-Phenylenen und 1,4-Cyclohexylenen aufweist.

12. Mischung nach einem oder mehreren der Ansprüche 1 bis 11, **dadurch gekennzeichnet, dass** sie zusätzlich zu der mindestens einen Verbindung der Formel (I) und der mindestens einen Verbindung, die gewählt ist aus flüssigkristallinen Verbindungen, eine oder mehrere Farbstoffverbindungen mit anderer Struktur als Formel (I) enthält.

13. Mischung nach Anspruch 12, **dadurch gekennzeichnet, dass** die Farbstoffverbindungen mit anderer Struktur als Formel (I) gewählt sind aus Perylenen, Terrylenen, Benzothiadiazolen und Azofarbstoffen.

14. Verwendung einer Mischung nach einem oder mehreren der Ansprüche 1 bis 13 in einer Vorrichtung zur Regulierung des Licht-Eintritts in einen Raum.

15. Vorrichtung zur Regulierung des Licht-Eintritts in einen Raum, enthaltend eine Mischung nach einem oder mehreren der Ansprüche 1 bis 13.

16. Vorrichtung nach Anspruch 15, **dadurch gekennzeichnet, dass** sie die folgende Schichtenabfolge aufweist, wobei zusätzlich weitere Schichten vorhanden sein können:
- Substratschicht
- elektrisch leitfähige transparente Schicht
- Orientierungsschicht
- Schaltschicht, enthaltend eine Mischung nach einem oder mehreren der Ansprüche 1 bis 16,
- Orientierungsschicht
- elektrisch leitfähige transparente Schicht
- Substratschicht.

17. Fenster, enthaltend eine Vorrichtung nach Anspruch 15 oder 16.

## Claims

1. Liquid-crystalline mixture comprising at least one compound of the formula (I) 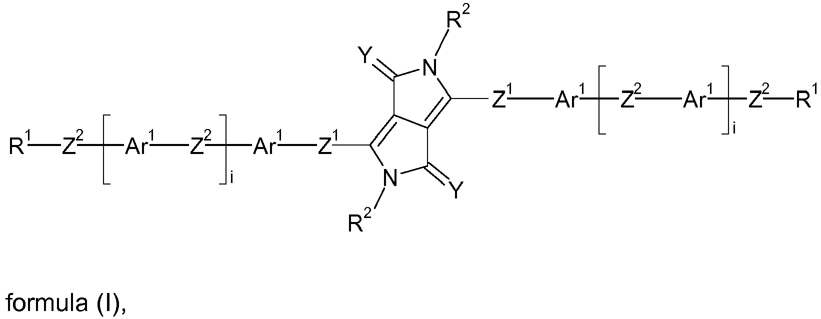 where the following applies to the symbols occurring:
Y is O;
Z¹ is a single bond;
Z² is on each occurrence, identically or differently, a single bond or a group selected from O, S, -C(R³)₂-, -C(R³)₂O-, -OC(R³)₂-, -CR³=CR³- and -C≡C-, or two, three, four or five groups selected from the said groups combined with one another;
Ar¹ is on each occurrence, identically or differently, an aryl or heteroaryl group having 5 to 30 aromatic ring atoms, which may be substituted by one or more radicals R⁴;
R¹ is on each occurrence, identically or differently, F or a straight-chain alkyl or alkoxy group having 3 to 12 C atoms, which may be substituted by one or more radicals R⁵, or a branched alkyl or alkoxy group having 3 to 12 C atoms, which may be substituted by one or more radicals R⁵, or a cyclic alkyl group having 6 C atoms, which may be substituted by one or more radicals R⁵, where one or more CH₂ groups in the alkyl and alkoxy groups may be replaced by -O- or -S-.
R^{Y}, R², R³, R⁴ are on each occurrence, identically or differently, H, D, F, Cl, CN, N(R⁵)₂, an alkyl, alkoxy or thioalkoxy group having 1 to 15 C atoms or an alkenyl or alkynyl group having 2 to 15 C atoms, where the above-mentioned groups may in each case be substituted by one or more radicals R⁵ and where one or more CH₂ groups in the above-mentioned groups may be replaced by -R⁵C=CR⁵-, -C≡C-, C=O, C=S, -C(=O)O-, -O(C=O)-, Si(R⁵)₂, NR⁵, -O- or -S-, or an aryl or heteroaryl group having 5 to 30 aromatic ring atoms, which may in each case be substituted by one or more radicals R⁵;
R⁵ is on each occurrence, identically or differently, H, D, F, Cl, CN, N(R⁶)₂, an alkyl, alkoxy or thioalkoxy group having 1 to 15 C atoms or an alkenyl or alkynyl group having 2 to 15 C atoms, where the above-mentioned groups may in each case be substituted by one or more radicals R⁶ and where one or more CH₂ groups in the above-mentioned groups may be replaced by -R⁶C=CR⁶-, -C≡C-, C=O, C=S, -C(=O)O-, -O(C=O)-, Si(R⁶)₂, NR⁶, -O- or -S-, or an aryl or heteroaryl group having 5 to 30 aromatic ring atoms, which may in each case be substituted by one or more radicals R⁶;
R⁶ is on each occurrence, identically or differently, H, F or an aliphatic organic radical having 1 to 20 C atoms, in which one or more H atoms may be replaced by F, or an aryl or heteroaryl group having 5 to 20 C atoms, in which one or more H atoms may be replaced by F;
i is on each occurrence, identically or differently, 0, 1, 2, 3 or 4;
and at least one further compound selected from liquid-crystalline compounds,
where the at least one compound of the formula (I) is present in solution.

2. Mixture according to Claim 1, **characterised in that** Z² in formula (I) is on each occurrence, identically or differently, a single bond or a group selected from -CH₂CH₂-, -CF₂CF₂-, -OCH₂-, -OCF₂-, -CH₂O-, -CF₂O-, -CH=CH-, -CF=CF- and -C≡C-.

3. Mixture according to Claim 1 or 2, **characterised in that** Ar¹ in formula (I) is on each occurrence, identically or differently, an aryl group having 6 to 13 aromatic ring atoms, which may be substituted by one or more radicals R⁴, or a heteroaryl group having 5 to 13 aromatic ring atoms, which may be substituted by one or more radicals R⁴.

4. Mixture according to one or more of Claims 1 to 3, **characterised in that** Ar¹ in formula (I) is selected on each occurrence, identically or differently, from benzene, fluorene, naphthalene, pyridine, pyrimidine, pyrazine, triazine, thiophene, benzothiophene, dibenzothiophene, furan, benzofuran, dibenzofuran, indole, carbazole, thiazole, benzothiazole and quinoline, which may in each case be substituted by one or more radicals R⁴.

5. Mixture according to one or more of Claims 1 to 4, **characterised in that** R² in formula (I) is on each occurrence, identically or differently, an alkyl group having 1 to 12 C atoms, which may be substituted by one or more radicals R⁵.

6. Mixture according to one or more of Claims 1 to 5, **characterised in that** i in formula (I) is on each occurrence, identically or differently, 1 or 2.

7. Mixture according to one or more of Claims 1 to 6, **characterised in that** the degree of anisotropy R of the compound of the formula (I) is greater than 0.6.

8. Mixture according to one or more of Claims 1 to 7, **characterised in that** it comprises precisely one, two, three or four different compounds of the formula (I).

9. Mixture according to one or more of Claims 1 to 8, **characterised in that** it comprises 3 to 25 different liquid-crystalline compounds.

10. Mixture according to one or more of Claims 1 to 9, **characterised in that** it is a thermotropic liquid-crystalline material.

11. Mixture according to one or more of Claims 1 to 10, **characterised in that** the at least one further compound selected from liquid-crystalline compounds contains two, three or four structural elements based on 1,4-phenylenes and 1,4-cyclohexylenes.

12. Mixture according to one or more of Claims 1 to 11, **characterised in that**, in addition to the at least one compound of the formula (I) and the at least one compound selected from liquid-crystalline compounds, it comprises one or more dye compounds having a different structure than formula (I).

13. Mixture according to Claim 12, **characterised in that** the dye compounds having a different structure than formula (I) are selected from perylenes, terrylenes, benzothiadiazoles and azo dyes.

14. Use of a mixture according to one or more of Claims 1 to 13 in a device for regulating the entry of light into a space.

15. Device for regulating the entry of light into a space, comprising a mixture according to one or more of Claims 1 to 13.

16. Device according to Claim 15, **characterised in that** it has the following layer sequence, where further layers may additionally be present:
- substrate layer
- electrically conductive transparent layer
- alignment layer
- switching layer comprising a mixture according to one or more of Claims 1 to 13
- alignment layer
- electrically conductive transparent layer
- substrate layer.

17. Window containing a device according to Claim 15 or 16.

## Revendications

1. Mélange de cristaux liquides comprenant au moins un composé de la formule (I) : 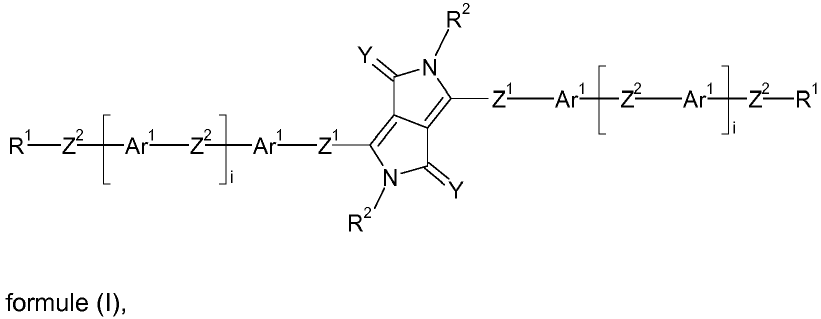 dans laquelle ce qui suit s'applique aux symboles rencontrés :
Y est O ;
Z¹ est une liaison simple ;
Z² est pour chaque occurrence, de manière identique ou différente, une liaison simple ou un groupe qui est sélectionné parmi O, S, -C(R³)₂-, -C(R³)₂O-, -OC(R³)₂-,-CR³=CR³- et -C≡C-, ou deux, trois, quatre ou cinq groupes qui sont sélectionnés parmi les groupes sont combinés l'un avec l'autre ou les uns avec les autres ;
Ar¹ est pour chaque occurrence, de manière identique ou différente, un groupe aryle ou hétéroaryle qui comporte de 5 à 30 atomes de cycle aromatique, lequel peut être substitué par un radical ou par plusieurs radicaux R⁴ ;
R¹ est pour chaque occurrence, de manière identique ou différente, F ou un groupe alkyle ou alcoxy en chaîne droite qui comporte de 3 à 12 atomes de C, lequel peut être substitué par un radical ou par plusieurs radicaux R⁵, ou un groupe alkyle ou alcoxy ramifié qui comporte de 3 à 12 atomes de C, lequel peut être substitué par un radical ou par plusieurs radicaux R⁵, ou un groupe alkyle cyclique qui comporte 6 atomes de C, lequel peut être substitué par un radical ou par plusieurs radicaux R⁵, où un ou plusieurs groupe(s) CH₂ dans les groupes alkyle et alcoxy peut/peuvent être remplacé(s) par -O- ou -S- ;
R^{Y}, R², R³, R⁴ sont pour chaque occurrence, de manière identique ou différente, H, D, F, Cl, CN, N(R⁵)₂, un groupe alkyle, alcoxy ou thioalcoxy qui comporte de 1 à 15 atome(s) de C ou un groupe alkényle ou alkynyle qui comporte de 2 à 15 atomes de C, où les groupes qui ont été mentionnés ci-avant peuvent dans chaque cas être substitués par un radical ou par plusieurs radicaux R⁵ et où un ou plusieurs groupe(s) CH₂ dans les groupes qui ont été mentionnés ci-avant peut/ peuvent être remplacé(s) par -R⁵C=CR⁵-, -C≡C-, C=O, C=S, -C(=O)O-, -O(C=O)-, Si(R⁵)₂, NR⁵, -O- ou -S-, ou un groupe aryle ou hétéroaryle qui comporte de 5 à 30 atomes de cycle aromatique, lequel peut dans chaque cas être substitué par un radical ou par plusieurs radicaux R⁵;
R⁵ est pour chaque occurrence, de manière identique ou différente, H, D, F, Cl, CN, N(R⁶)₂, un groupe alkyle, alcoxy ou thioalcoxy qui comporte de 1 à 15 atome(s) de C ou un groupe alkényle ou alkynyle qui comporte de 2 à 15 atomes de C, où les groupes qui ont été mentionnés ci-avant peuvent dans chaque cas être substitués par un radical ou par plusieurs radicaux R⁶ et où un ou plusieurs groupe(s) CH₂ dans les groupes qui ont été mentionnés ci-avant peut/peuvent être remplacé(s) par -R⁶C=CR⁶-, -C≡C-, C=O, C=S, -C(=O)O-, -O(C=O)-, Si(R⁶)₂, NR⁶, -O- ou -S-, ou un groupe aryle ou hétéroaryle qui comporte de 5 à 30 atomes de cycle aromatique, lequel peut dans chaque cas être substitué par un radical ou par plusieurs radicaux R⁶ ;
R⁶ est pour chaque occurrence, de manière identique ou différente, H, F ou un radical organique aliphatique qui comporte de 1 à 20 atome(s) de C, où un ou plusieurs atome(s) de H peut/peuvent être remplacé(s) par F, ou un groupe aryle ou hétéroaryle qui comporte de 5 à 20 atomes de C, où un ou plusieurs atome(s) de H peut/peuvent être remplacé(s) par F ;
i est pour chaque occurrence, de manière identique ou différente, 0, 1, 2, 3 ou 4 ;
et au moins un autre composé qui est sélectionné parmi des composés cristallins liquides,
où l'au moins un composé de la formule (I) est présent en solution.

2. Mélange selon la revendication 1, **caractérisé en ce que** Z² dans la formule (I) est pour chaque occurrence, de manière identique ou différente, une liaison simple ou un groupe qui est sélectionné parmi -CH₂CH₂-, -CF₂CF₂-, -OCH₂-, -OCF₂-, -CH₂O-, -CF₂O-, -CH=CH-, -CF=CF- et -C≡C-.

3. Mélange selon la revendication 1 ou 2, **caractérisé en ce que** Ar¹ dans la formule (I) est pour chaque occurrence, de manière identique ou différente, un groupe aryle qui comporte de 6 à 13 atomes de cycle aromatique, lequel peut être substitué par un radical ou par plusieurs radicaux R⁴, ou un groupe hétéroaryle qui comporte de 5 à 13 atomes de cycle aromatique, lequel peut être substitué par un radical ou par plusieurs radicaux R⁴.

4. Mélange selon une ou plusieurs des revendications 1 à 3, **caractérisé en ce que** Ar¹ dans la formule (I) est pour chaque occurrence, de manière identique ou différente, sélectionné parmi benzène, fluorène, naphtalène, pyridine, pyrimidine, pyrazine, triazine, thiophène, benzothiophène, dibenzothiophène, furane, benzofurane, dibenzofurane, indole, carbazole, thiazole, benzothiazole et quinoline, lesquels peuvent dans chaque cas être substitués par un radical ou par plusieurs radicaux R⁴.

5. Mélange selon une ou plusieurs des revendications 1 à 4, **caractérisé en ce que** R² dans la formule (I) est pour chaque occurrence, de manière identique ou différente, un groupe alkyle qui comporte de 1 à 12 atome(s) de C, lequel peut être substitué par un radical ou par plusieurs radicaux R⁵.

6. Mélange selon une ou plusieurs des revendications 1 à 5, **caractérisé en ce que** i dans la formule (I) est pour chaque occurrence, de manière identique ou différente, 1 ou 2.

7. Mélange selon une ou plusieurs des revendications 1 à 6, **caractérisé en ce que** le degré d'anisotropie R du composé de la formule (I) est supérieur à 0,6.

8. Mélange selon une ou plusieurs des revendications 1 à 7, **caractérisé en ce qu'**il comprend précisément un, deux, trois ou quatre composés différents de la formule (I).

9. Mélange selon une ou plusieurs des revendications 1 à 8, **caractérisé en ce qu'**il comprend de 3 à 25 composés cristallins liquides différents.

10. Mélange selon une ou plusieurs des revendications 1 à 9, **caractérisé en ce qu'**il s'agit d'un matériau cristallin liquide thermotrope.

11. Mélange selon une ou plusieurs des revendications 1 à 10, **caractérisé en ce que** l'au moins un autre composé qui est sélectionné parmi des composés cristallins liquides contient deux, trois ou quatre éléments structurels basés sur les 1,4-phénylènes et les 1,4-cyclohexylènes.

12. Mélange selon une ou plusieurs des revendications 1 à 11, **caractérisé en ce que**, en plus de l'au moins un composé de la formule (I) et de l'au moins un composé qui est sélectionné parmi des composés cristallins liquides, il comprend un ou plusieurs composé(s) de colorant qui présente(nt) une structure différente de celle de la formule (I).

13. Mélange selon la revendication 12, **caractérisé en ce que** les composés de colorant qui présentent une structure différente de celle de la formule (I) sont sélectionnés parmi les pérylènes, les terrylènes, les benzothiadiazoles et les colorants azo.

14. Utilisation d'un mélange selon une ou plusieurs des revendications 1 à 13 dans un dispositif pour réguler l'entrée de lumière à l'intérieur d'un espace.

15. Dispositif pour réguler l'entrée de lumière à l'intérieur d'un espace, comprenant le mélange selon une ou plusieurs des revendications 1 à 13.

16. Dispositif selon la revendication 15, **caractérisé en ce qu'**il comporte la séquence de couches qui suit, où d'autres couches peuvent de façon additionnelle être présentes :
- une couche de substrat ;
- une couche transparente électriquement conductrice ;
- une couche d'alignement ;
- une couche de commutation qui comprend un mélange selon une ou plusieurs des revendications 1 à 13 ;
- une couche d'alignement ;
- une couche transparente électriquement conductrice ;
- une couche de substrat.

17. Fenêtre contenant un dispositif selon la revendication 15 ou 16.
